# EUROPÄISCHE PATENTSCHRIFT

(11) **EP 3 116 927 B1**
(45) Veröffentlichungstag und Bekanntmachung des Hinweises auf die Patenterteilung: **24.01.2018**
(21) Anmeldenummer: 15709886.4
(22) Anmeldetag: 10.03.2015
(51) Int. Cl.: C08G 18/63, C08G 18/65, C08G 18/76, C08G 18/80, C08G 18/12, C08G 18/22, C08G 18/32, C08K 5/29, C09J 175/08, C08G 18/08

(54) **ZWEIKOMPONENTIGER POLYURETHAN-KLEBSTOFF MIT LANGER OFFENZEIT**
TWO-COMPONENT POLYURETHANE ADHESIVE WITH LONG WORKING TIME
ADHÉSIF POLYURÉTHANE BICOMPOSANT AVEC LONG TEMPS OUVERT

(30) Priorität: 11.03.2014 EP 14158949
(43) Veröffentlichungstag der Anmeldung: 18.01.2017
(73) Patentinhaber: Sika Technology AG, 6340 Baar (CH)
(72) Erfinder: CANNAS, Rita, CH-8600 Dübendorf (CH); STADELMANN, Ursula, CH-8046 Zürich (CH); BURCKHARDT, Urs, CH-8049 Zürich (CH)
(74) Vertreter: Sika Patent Attorneys
(86) Internationale Anmeldenummer: PCT/EP2015/054917
(87) Internationale Veröffentlichungsnummer: WO 2015/135914

(56) Entgegenhaltungen:
- US-A1- 2009 099 333

## Beschreibung

### Technisches Gebiet

Die Erfindung betrifft eine zweikomponentige Polyurethanzusammensetzung, welche insbesondere für elastische Klebeanwendungen einsetzbar ist.

### Stand der Technik

Elastische Klebeverbindungen werden in der industriellen Fertigung verwendet, um Materialien so zu verbinden, dass sich die verbundenen Teile bei Erschütterungen in einem gewissen Masse gegeneinander bewegen können und somit nur deutlich reduzierte Kräfte auf das jeweilige andere Bauteil übertragen werden.

Bekannte Klebstoffe für elastische Klebeanwendungen sind zweikomponentige Polyurethanzusammensetzungen auf der Basis von Polyolen und Polyisocyanaten. Im Vergleich mit den ebenso oft eingesetzten einkomponentigen Systemen sind sie zwar anspruchsvoller in der Anwendung, da sie zur Erreichung der gewünschten Eigenschaften eine genaue Dosierung und eine vollständige Mischung der Komponenten voraussetzen. Dafür enthalten sie nur wenig oder keine Lösemittel oder Verdünner bzw. Weichmacher, weisen also kaum Emissionen oder Schwund auf, und sie härten nach dem Mischen grundsätzlich rasch und homogen durch, ohne dafür Feuchtigkeit aus der Umgebung aufnehmen zu müssen. Dadurch können sie bereits nach kurzer Zeit Kräfte aufnehmen und übertragen. Die bekannten Systeme weisen aber diverse Nachteile auf. Ihre Offenzeit ist vor allem bei erhöhter Temperatur, beispielsweise infolge Umgebungswärme oder Sonnenlicht oder durch bei Vorbehandlungsschritten erhitzten Substraten, so kurz, dass eine praktikable Verklebung mit Positionskorrektur kaum mehr möglich ist, vor allem bei grossen Objekten mit langen Klebefugen oder komplexer Klebegeometrie. Bei tiefer Temperatur hingegen ist der Festigkeitsaufbau oft so langsam, dass das geklebte Objekt eine sehr lange Standzeit benötigt oder zusätzlich aufgeheizt werden muss, bevor es bewegt und mechanisch belastet und Fixierhilfen entfernt werden können, ohne dass die Verklebung Schaden nimmt. Bei hoher Luftfeuchtigkeit kann es zudem zu Aushärtungsstörungen wie Blasenbildung oder Oberflächenklebrigkeit kommen, verursacht durch die Hydrolysereaktion von Isocyanatgruppen.

Um die Offenzeit zu verlängern, können langsam reagierende Polyole in Verbindung mit sterisch gehinderten Isocyanaten und selektiven, die Hydrolysereaktion der Isocyanate wenig beschleunigenden Katalysatoren eingesetzt werden. Übliche sterisch gehinderte Isocyanate wie zum Beispiel Toluylendiisocyanat (TDI) sind aber aufgrund ihrer hohen Flüchtigkeit stark atemwegsreizend und deshalb aus Gesundheitsschutzgründen nachteilig, und die aus dem Stand der Technik bekannten selektiven Katalysatoren, insbesondere Quecksilber- oder Bleiverbindungen, sind für Mensch und Umwelt stark toxisch. Versuche, diese Katalyatoren durch weniger toxische Verbindungen zu ersetzen, führen meist schon bei moderaten Temperaturen zu einer starken Blasenbildung, klebriger Oberfläche und geringer Festigkeit aufgrund von Hydrolyse-Nebenreaktionen bei der Aushärtung, insbesondere dann, wenn die Klebstoffe auf Basis des nichtflüchtigen, aber hochreaktiven Diphenylmethandiisocyanats (MDI) formuliert sind.

Mit dem Einsatz von Kettenverlängerern wie Diolen oder Diaminen kann zwar dem Problem der Blasenbildung entgegengewirkt und gleichzeitig eine raschere Aushärtung in der Kälte und bessere mechanische Eigenschaften erzielt werden, die Offenzeit wird dabei aber wieder sehr stark verkürzt. Mit der Verwendung von Oxazolidinen als chemisch blockierten Kettenverlängerern, in Kombination mit einem Bismut-Katalysator, wie in US 5,603,798 beschrieben, kann zwar eine etwas längere Offenzeit erzielt werden. Diese ist aber noch immer relativ kurz, und es muss dafür eine beträchtliche Geruchsbelastung und VOC-Emission durch das aus dem Oxazolidin freigesetzte leichtflüchtige Blockierungsmittel in Kauf genommen werden.

### Darstellung der Erfindung

Aufgabe der vorliegenden Erfindung ist es daher, einen lösemittelfreien, geruchsarmen zweikomponentigen Polyurethan-Klebstoff ohne flüchtige Isocyanate für elastische Klebeanwendungen zur Verfügung zu stellen, dessen Komponenten gut lagerfähig sind und welcher bei der Anwendung einfach mischbar ist, eine lange Offenzeit bei einer raschen und störungsfreien Aushärtung über einen breiten Temperatur- und Feuchtigkeitsbereich aufweist und nach der Aushärtung über eine hohe Festigkeit und Elastizität verfügt.

Überraschenderweise wurde gefunden, dass eine Zusammensetzung nach Anspruch 1 diese Aufgabe löst. Die Kombination aus Polymer-Polyol und Aldimin der Formel (I) ermöglicht zusammen mit dem Zirkonium(IV)-Katalysator elastische Klebstoffe basierend auf dem hochreaktiven, unflüchtigen Diphenylmethandiisocyanat (MDI) mit sehr langer Offenzeit, rascher und störungsfreier Aushärtung und hoher Endfestigkeit und Elastizität. Für die hohe Endfestigkeit ist dabei ein Mindestgehalt an Polymer aus dem Polymer-Polyol notwendig. Dabei wirkt das Polymer als verstärkender Füllstoff, wobei aber im Vergleich zu üblichen anorganischen Füllstoffen wesentlich höhere Endfestigkeiten erreicht werden und die Dichte des Klebstoffs deutlich niedriger bleibt, was insbesondere im Leichtbau von Vorteil ist. Das Aldimin der Formel (I) ermöglicht eine lange Offenzeit und begünstigt ebenfalls die hohe Endfestigkeit. Ein Austausch des Aldimins der Formel (I) durch einen Diol-Kettenverlängerer wie 1,4-Butandiol ermöglicht zwar ebenfalls hohe Festigkeiten, wobei aber die Offenzeit sehr stark verkürzt ist. Der aus dem Aldimin der Formel (I) freigesetzte Aldehyd ist geruchsarm oder geruchlos und so wenig flüchtig, dass er weitgehend im ausgehärteten Klebstoff verbleibt. Der Zirkonium(IV)-Katalysator begünstigt sowohl die lange Offenzeit als auch die rasche und weitgehend blasenfreie Aushärtung zum nicht-klebrigen Material mit hoher Endfestigkeit und Elastizität. Dabei ist der Zirkonium(IV)-Katalysator anderen aus dem Stand der Technik bekannten Katalysatoren überlegen. Beim Einsatz eines Organozinn-Katalysators anstelle des Zirkonium(IV)-Katalysators ist zum Beispiel die Endfestigkeit deutlich reduziert, mit einem Aminkatalysator entstehen Blasen und die Endfestigkeit ist noch stärker reduziert, und mit einem Bismut-Katalysator ist die Offenzeit stark verkürzt. Weiterhin vorteilhaft ist der Umstand, dass das E-Modul des Klebstoffs im niedrigen Dehnungsbereich, zum Beispiel bei 0% bis 5% Dehnung, trotz der hohen Endfestigkeit überraschend niedrig ist. Dadurch ist der Klebstoff nicht allzu steif und vermag kleine Bewegungen und Vibrationen der verklebten Teile gut zu dämpfen.

Überraschend an der erfindungsgemässen Zusammensetzung ist vor allem der Umstand, dass die Zusammensetzung trotz des hochreaktiven aromatischen Isocyanats MDI eine sehr lange Offenzeit aufweist, dennoch blasenfrei aushärtet und rasch sehr gute mechanische Eigenschaften entwickelt, trotz des in der Zusammensetzung verbleibenden weichmachenden Aldehyds.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine Zusammensetzung bestehend aus einer ersten Komponente enthaltend
- mindestens ein Polymer-Polyol, welches eine Dispersion eines bei Raumtemperatur festen Polymers in einem bei Raumtemperatur flüssigen Polyetherpolyol ist,
- und gegebenenfalls weitere Polyole,
wobei der Anteil an festem Polymer aus dem Polymer-Polyol mindestens 15 Gewichts-% bezogen auf die Summe aus Polymer-Polyol und gegebenenfalls vorhandenen weiteren Polyolen beträgt;
und einer zweite Komponente enthaltend Diphenylmethandiisocyanat;
wobei mindestens eine der beiden Komponenten zusätzlich mindestens eine Zirkonium(IV)-Verbindung als Katalysator enhält;
und wobei mindestens eine der beiden Komponenten zusätzlich mindestens ein Aldimin der Formel (I) enthält, 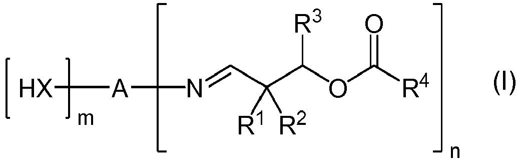 wobei
A für einen (m+n)-wertigen, gegebenenfalls Ethereinheiten enthaltenden, Kohlenwasserstoff-Rest mit 2 bis 20 C-Atomen steht,
X für O oder N-R⁵ steht,
R¹ und R² unabhängig voneinander jeweils für einen einwertigen Kohlenwasserstoff-Rest mit 1 bis 12 C-Atomen stehen, oder zusammen für einen zweiwertigen Kohlenwasserstoff-Rest mit 4 bis 12 C-Atomen stehen, welcher Teil eines, gegebenenfalls substituierten, carbocyclischen Rings mit 5 bis 8, bevorzugt 6, C-Atomen ist;
R³ für ein Wasserstoffatom oder für einen Alkyl- oder Arylalkyl- oder Alkoxycarbonyl-Rest mit 1 bis 12 C-Atomen steht;
R⁴ für einen einwertigen, gegebenenfalls Ether- oder Aldehydeinheiten enthaltenden Kohlenwasserstoff-Rest mit 6 bis 20 C-Atomen steht;
R⁵ für einen einwertigen Kohlenwasserstoff-Rest mit 1 bis 30 C-Atomen steht, welcher gegebenenfalls mindestens eine Carbonsäureester-, Nitril-, Nitro-, Phosphonsäureester-, Sulfon- oder Sulfonsäureester-Gruppe oder eine Gruppe der Formel 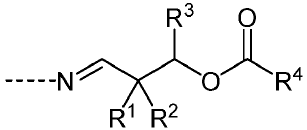 aufweist; und
m für 0 oder 1 und n für 1 oder 2 oder 3 steht, mit der Massgabe, dass m+n für 2 oder 3 steht.

Als "Diphenylmethandiisocyanat" oder abgekürzt "MDI" werden alle isomeren Formen von Diphenylmethandiisocyanat und beliebige Mischungen davon bezeichnet, insbesondere Diphenylmethan-4,4'-diisocyanat, Diphenylmethan-2,4'-diisocyanat und Diphenylmethan-2,2'-diisocyanat.

Eine gestrichelte Linie in den Formeln in diesem Dokument stellt jeweils die Bindung zwischen einem Substituenten und dem zugehörigen Molekülrest dar. Als "primäre Hydroxylgruppe" wird eine OH-Gruppe bezeichnet, welche an ein C-Atom mit zwei Wasserstoffen gebunden ist.

Als "primäre Aminogruppe" wird eine NH₂-Gruppe bezeichnet, die an einen organischen Rest gebunden ist und als "sekundäre Aminogruppe" wird eine NH-Gruppe bezeichnet, die an zwei organische Reste, welche auch gemeinsam Teil eines Rings sein können, gebunden ist.

Unter "Molekulargewicht" versteht man im vorliegenden Dokument die molare Masse (in Gramm pro Mol) eines Moleküls. Als "mittleres Molekulargewicht" wird das Zahlenmittel Mₙ einer oligomeren oder polymeren Mischung von Molekülen bezeichnet, welches üblicherweise mittels Gelpermeationschromatographie (GPC) gegen Polystyrol als Standard bestimmt wird.
Als "lagerstabil" oder "lagerfähig" wird eine Substanz oder eine Zusammensetzung bezeichnet, wenn sie bei Raumtemperatur in einem geeigneten Gebinde während längerer Zeit, typischerweise während mindestens 3 Monaten bis zu 6 Monaten und mehr, aufbewahrt werden kann, ohne dass sie sich in ihren Anwendungs- oder Gebrauchseigenschaften durch die Lagerung in einem für ihren Gebrauch relevanten Ausmass verändert.
Als "Raumtemperatur" wird eine Temperatur von ca. 23 °C bezeichnet.

Die erste Komponente der Zusammensetzung enthält mindestens ein Polymer-Polyol, welches eine Dispersion eines bei Raumtemperatur festen Polymers in einem bei Raumtemperatur flüssigen Polyetherpolyol ist.
Das feste Polymer weist bevorzugt eine mittleren Teilchengrösse von höchstens 5 µm auf. Die mittlere Teilchengrösse liegt besonders bevorzugt unterhalb von 2 µm, insbesondere im Bereich von 0.1 bis 1 µm.

Geeignete Polymer-Polyole sind Polyetherpolyole enthaltend Polymere und/oder Copolymere vinylischer Monomere wie insbesondere Acrylnitril, Styrol, α-Methylstyrol, Methyl(meth)acrylat oder Hydroxyethyl(meth)acrylat, sowie Polyharnstoffe bzw. Polyhydrazodicarbonamide (PHD) oder Polyurethane, wobei die beiden Phasen eine stabile, lagerfähige Dispersion bilden und das Polymer partiell auf das Polyetherpolyol gepfropft beziehungsweise kovalent ans Polyetherpolyol gebunden sein kann.
Bevorzugt sind Polymer-Polyole, bei welchen das feste Polymer ein Copolymer von Acrylnitril und Styrol (SAN) oder ein Polyharnstoff bzw. Polyhydrazodicarbonamid (PHD) oder ein Polyurethan ist. Diese Polymer-Polyole sind besonders gut herstellbar und lagerfähig. Ganz besonders bevorzugt ist SAN. Dieses ist besonders hydrophob und somit vorteilhaft in Kombination mit Isocyanaten.

Das Polyetherpolyol des Polymer-Polyols ist bevorzugt ein Polyoxyalkylenpolyol, welches durch ringöffnende Polymerisation von Oxiranen, insbesondere Ethylenoxid und/oder 1,2-Propylenoxid, mit Hilfe eines Startermoleküls mit zwei oder mehreren aktiven Wasserstoffatomen, insbesondere Wasser, Glykole wie 1,2-Ethandiol, 1,2- und 1,3-Propandiol, Neopentylglykol, Diethylenglykol, Triethylenglykol, Polyethylenglykole, Dipropylenglykol, Tripropylenglykol oder Polypropylenglykole, oder Triole, insbesondere Glycerin oder 1,1,1-Trimethylolpropan, oder Zuckeralkohole, insbesondere Sorbit (D-Glucitol), oder Diphenole, insbesondere Bisphenol A, oder Amine, insbesondere Ammoniak, Ethylendiamin oder Anilin, oder einer Mischung davon, hergestellt ist.
Besonders bevorzugt ist es ein Polyoxyalkylenpolyol, insbesondere ein Polyoxypropylenpolyol oder ein Ethylenoxid-terminiertes ("EO-endcapped") Polyoxypropylenpolyol.
Das Polyetherpolyol des Polymer-Polyols weist bevorzugt ein Molekulargewicht im Bereich von 400 bis 8000 g/mol, insbesondere 1000 bis 6000 g/mol, auf.
Das Polyetherpolyol des Polymer-Polyols weist bevorzugt eine mittlere OH-Funktionalität im Bereich von 1.75 bis 3.5, insbesondere 2.25 bis 3.0, auf.

Am meisten bevorzugt ist das Polyetherpolyol des Polymer-Polyols ein Ethylenoxid-terminiertes Polyoxypropylentriol mit einem Molekulargewicht im Bereich von1000 bis 6000 g/mol. Ein solches Polymer-Polyol verfügt vorwiegend über primäre Hydroxylgruppen, ist relativ hydrophob und weist eine OH-Funktionalität von mehr als 2 auf, wodurch es besonders geeignet ist für die Kombination mit Isocyanaten.

Das Polymer-Polyol kann aus beliebigen Kombinationen der genannten festen Polymere und der genannten Polyetherpolyole bestehen.
Ein ganz besonders bevorzugtes Polymer-Polyol ist ein Ethylenoxid-terminiertes Polyoxypropylentriol mit einem Molekulargewicht im Bereich von1000 bis 6000 g/mol enthaltend ein SAN-Polymer.

Das Polymer-Polyol weist bevorzugt einen Gehalt an festem Polymer im Bereich von 10 bis 50 Gewichts-% auf.
Als Polymer-Polyol bevorzugt sind kommerziell erhältliche Typen, welche vor allem für die Herstellung von Polyurethan-Weichschäumen verwendet werden, insbesondere die SAN-Polyole Lupranol® 4003/1, Lupranol® 4006/1/SC10, Lupranol® 4006/1/SC15, Lupranol® 4006/1/SC25, Lupranol® 4010/1/SC10, Lupranol® 4010/1/SC15, Lupranol® 4010/1/SC25, Lupranol® 4010/1/SC30 oder Lupranol® 4010/1/SC40 (alle von BASF), Desmophen® 5027 GT oder Desmophen® 5029 GT (beide von Bayer MaterialScience), Voralux® HL106, Voralux® HL108, Voralux® HL109, Voralux® HL120, Voralux® HL400, Voralux® HN360, Voralux® HN370, Voralux® HN380 oder Specflex® NC 700 (alle von Dow), Caradol® SP27-25, Caradol® SP30-15, Caradol® SP30-45, Caradol® SP37-25, Caradol® SP42-15, Caradol® SP44-10 oder Caradol® MD22-40 (alle von Shell), sowie das PHD-Polyol Desmophen® 5028 GT (von Bayer MaterialScience). Davon besonders bevorzugt sind die SAN-Polyole, insbesondere die genannten kommerziell erhältlichen Typen.

Die erste Komponente der Zusammensetzung enthält gegebenenfalls weitere Polyole.
Als weitere Polyole geeignet sind insbesondere die Folgenden:
- Polyoxyalkylenpolyole, auch Polyetherpolyole genannt, welche Polymerisationsprodukte von Ethylenoxid, 1,2-Propylenoxid, 1,2- oder 2,3-Butylenoxid, Oxetan, Tetrahydrofuran oder Mischungen davon sind, eventuell polymerisiert mit Hilfe eines Startermoleküls mit zwei oder mehreren aktiven Wasserstoffatomen. Speziell geeignet sind Ethylenoxid-terminierte Polyoxypropylenpolyole.
- Polyesterpolyole, insbesondere aus der Polykondensation von Hydroxycarbonsäuren oder insbesondere solche, welche hergestellt sind aus zwei- bis dreiwertigen, insbesondere zweiwertigen, Alkoholen, wie beispielsweise Ethylenglykol, Diethylenglykol, Propylenglykol, Dipropylenglykol, Neopentylglykol, 1,4-Butandiol, 1,5-Pentandiol, 3-Methyl-1,5-hexandiol, 1,6-Hexandiol, 1,8-Octandiol, 1,10-Decandiol, 1,12-Dodecandiol, 1,12-Hydroxystearylalkohol, 1,4-Cyclohexandimethanol, Dimerfettsäurediol (Dimerdiol), Hydroxypivalinsäureneopentylglykolester, Glycerin, 1,1,1-Trimethylolpropan oder Mischungen der vorgenannten Alkohole, mit organischen Di- oder Tricarbonsäuren, insbesondere Dicarbonsäuren, oder deren Anhydride oder Ester, wie insbesondere Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure oder Trimellithsäureanhydrid, oder Mischungen der vorgenannten Säuren, sowie Polyesterpolyole aus Lactonen wie insbesondere ε-Caprolacton und Startern wie den vorgenannten zwei- oder dreiwertigen Alkoholen.

Besonders geeignete Polyesterpolyole sind Polyesterdiole.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen, insbesondere Polyetherpolyesterpolyole.
- Polyacrylat- und Polymethacrylatpolyole.
- Polyhydroxyfunktionelle Fette und Öle, beispielsweise natürliche Fette und Öle, inbesondere Rizinusöl; oder durch chemische Modifizierung von natürlichen Fetten und Ölen gewonnene - sogenannte oleochemische - Polyole, beispielsweise die durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole; oder aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivaten davon erhaltene Polyole. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.
- Polykohlenwasserstoffpolyole, auch Oligohydrocarbonole genannt, wie beispielsweise polyhydroxyfunktionelle Polyolefine, Polyisobutylene, Polyisoprene; polyhydroxyfunktionelle Ethylen-Propylen-, Ethylen-Butylen- oder Ethylen-Propylen-Dien-Copolymere, wie sie beispielsweise von der Firma Kraton Polymers hergestellt werden; polyhydroxyfunktionelle Polymere von Dienen, insbesondere von 1,3-Butadien, welche insbesondere auch aus anionischer Polymerisation hergestellt sein können; polyhydroxyfunktionelle Copolymere aus Dienen wie 1,3-Butadien oder Diengemischen und Vinylmonomeren wie Styrol, Acrylonitril, Vinylchlorid, Vinylacetat, Vinylalkohol, Isobutylen und Isopren, beispielsweise polyhydroxyfunktionelle Acrylonitril/ Butadien-Copolymere, wie sie beispielsweise aus Epoxiden oder Aminoalkoholen und carboxylterminierten Acrylonitril/Butadien-Copolymeren (beispielsweise kommerziell erhältlich unter dem Namen Hypro® (früher Hycar®) CTBN und CTBNX und ETBN von Nanoresins AG, Deutschland, bzw. Emerald Performance Materials LLC) hergestellt werden können; sowie hydrierte polyhydroxyfunktionelle Polymere oder Copolymere von Dienen.

Diese genannten Polyole weisen bevorzugt ein mittleres Molekulargewicht im Bereich von 400 bis 8'000 g/mol, insbesondere 1'000 bis 6'000 g/mol, und eine mittlere OH-Funktionalität im Bereich von 1.6 bis 4 auf.

Als weiteres Polyol bevorzugt ist ein Polyetherpolyol, ein Polyesterpolyol, ein Polycarbonatpolyol oder ein Polybutadienpolyol.
Besonders bevorzugt enthält die Zusammensetzung als weiteres Polyol ein Ethylenoxid-terminiertes Polyoxypropylendi- oder -triol und/oder ein Polybutadienpolyol.

Der Anteil an festem Polymer aus dem Polymer-Polyol in der Zusammensetzung beträgt mindestens 15 Gewichts-% bezogen auf die Summe aus Polymer-Polyol und gegebenenfalls vorhandenen weiteren Polyolen. Dieser Mindestgehalt ermöglicht eine hohe Endfestigkeit der ausgehärteten Zusammensetzung.

Bevorzugt liegt der Anteil an festem Polymer aus dem Polymer-Polyol im Bereich von 15 bis 50 Gewichts-%, besonders bevorzugt im Bereich von 20 bis 50 Gewichts-%, insbesondere im Bereich von 25 bis 45 Gewichts-%, bezogen auf die Summe aus Polymer-Polyol und gegebenenfalls vorhandenen weiteren Polyolen. In diesem Bereich weist die erste Komponente eine gute Konsistenz zum einfachen Vermischen mit der zweiten Komponente und eine hohe Endfestigkeit auf.

Die zweite Komponente der Zusammensetzung enthält Diphenylmethandiisocyanat (MDI). Als MDI bevorzugt sind Diphenylmethan-4,4'-diisocyanat (4,4'-MDI), Diphenylmethan-2,4'-diisocyanat (2,4'-MDI) und/oder Diphenylmethan-2,2'-diisocyanat (2,2'-MDI). Besonders bevozugt ist 4,4'-MDI. Damit werden besonders hohe Festigkeiten erreicht.
Bevorzugt weist die zweite Komponente einen Gehalt an monomerem Diphenylmethandiisocyanat im Bereich von 20 bis 100 Gewichts-%, besonders bevorzugt 25 bis 90 Gewichts-%, insbesondere 30 bis 80 Gewichts-%, auf.

Das MDI liegt bevorzugt in bei Raumtemperatur flüssiger Form mit hohem Gehalt an 4,4'-MDI vor. Das sogenannte "flüssige MDI" stellt entweder durch partielle chemische Modifizierung - insbesondere Carbodiimidisierung bzw. Uretoniminbildung oder Adduktbildung mit Polyolen - verflüssigtes 4,4'-MDI dar, oder es ist ein durch Abmischen gezielt herbeigeführtes oder durch den Herstellungsprozess bedingtes Gemisch von 4,4'-MDI mit anderen MDI-Isomeren (2,4'-MDI und/oder 2,2'-MDI), MDI-Oligomeren oder MDI-Homologen. Bevorzugt sind monomere MDI-Typen mit erhöhtem Anteil an 2,4'-MDI, beispielsweise die kommerziell erhältlichen Produkte Desmodur® 2424 (von Bayer MaterialScience) oder Lupranat® MI (von BASF), weiterhin Gemische von monomerem MDI und MDI-Homologen mit einem niedrigen Anteil an Homologen, beispielsweise die kommerziell erhältlichen Produkte Desmodur® VL50 (von Bayer MaterialScience) oder Voranate® M 2940 (von Dow), weiterhin partiell carbodiimidisiertes 4,4'-MDI, beispielsweise die kommerziell erhältlichen Produkte Desmodur® CD (von Bayer MaterialScience), Lupranat® MM 103 (von BASF), Isonate® M 143 oder Isonate® M 309 (beide von Dow), Suprasec® 2020 oder Suprasec® 2388 (beide von Huntsman), sowie weiterhin anteilig mit Polyolen bzw. mehrfunktionellen Alkoholen wie zum Beispiel Trimethylolpropan adduktierte MDI-Typen, sogenannte Quasi-Prepolymere, beispielsweise die kommerziell erhältlichen Produkte Desmodur® VH20 N, Desmodur® E21, Desmodur® E210 (alle von Bayer MaterialScience), Lupranat® MP 102 (von BASF), Echelon™ MP 107, Echelon™ MP 106 oder Echelon™ MP 102 (alle von Dow). Der Isocyanatgehalt dieser Quasi-Prepolymere liegt bevorzugt im Bereich von 10 bis 30 Gewichts-%, insbesondere 15 bis 28 Gewichts-%.

Besonders bevorzugt liegt das MDI in Form von partiell carbodiimidisiertem 4,4'-MDI und/oder in Form von anteilig mit Polyolen beziehungsweise polyfunktionellen Alkoholen adduktiertem 4,4'-MDI vor.

Die zweite Komponente enthält gegebenenfalls zusätzlich ein Isocyanatgruppen aufweisendes Polyurethanpolymer, wie es durch Umsetzung von Diisocyanaten mit Polyolen, insbesondere Polyetherpolyolen, Polyesterpolyolen oder Polycarbonatpolyolen, im NCO/OH-Verhältnis von 1.5 bis 5, insbesondere 1.8 bis 3, erhältlich ist und einen Gehalt an freien Isocyanatgruppen im Bereich von 0.5% bis 10%, insbesondere 1% bis 5%, aufweist.
Dafür geeignete Diisocyanate sind insbesondere 1,6-Hexamethylendiisocyanat (HDI), 1-Isocyanato-3,3,5-trimethyl-5-isocyanatomethyl-cyclohexan (=Isophorondiisocyanat oder IPDI), 2,4- und/oder 2,6-Toluylendiisocyanat (TDI) oder beliebige Gemische dieser Isomeren (TDI) oder MDI. Besonders geeignet ist MDI, insbesondere 4,4'-MDI.
Ein solches Isocyanatgruppen aufweisendes Polyurethanpolymer ist bevorzugt bei Raumtemperatur flüssig.

Bevorzugt weist die zweite Komponente der Zusammensetzung einen Isocyanat-Gehalt im Bereich von 10 bis 33.6 Gewichts-% auf. Mit einer solchen zweiten Komponente werden eine schnelle Aushärtung und hohe Festigkeiten erreicht.

Die Zusammensetzung enthält weiterhin mindestens ein Aldimin der Formel (I).

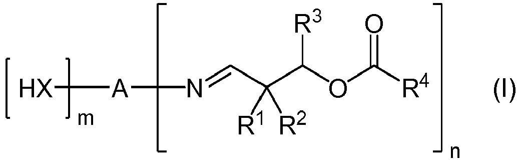

Bevorzugt steht A für einen Rest ausgewählt aus der Gruppe bestehend aus 2-Methyl-1,5-pentylen; 1,6-Hexylen; 2,2(4),4-Trimethyl-1,6-hexamethylen; 1,8-Octylen; 1,10-Decylen; 1,12-Dodecylen; (1,5,5-Trimethylcyclohexan-1-yl)methan-1,3; 1,3-Cyclohexylen-bis(methylen); 1,4-Cyclohexylen-bis(methylen); 1,3-Phenylen-bis(methylen); 2- und/oder 4-Methyl-1,3-cyclohexylen; 3-Oxa-1,5-pentylen; 3,6-Dioxa-1,8-octylen; 4,7-Dioxa-1,10-decylen; α,ω-Polyoxypropylen mit einem Molekulargewicht im Bereich von 170 bis 450 g/mol; und Trimethylolpropan-gestartetes Tris(ω-Polyoxypropylen) mit einem mittleren Molekulargewicht im Bereich von 330 bis 450 g/mol.
Besonders bevorzugt steht A für 1,6-Hexylen; (1,5,5-Trimethylcyclohexan-1-yl)methan-1,3; 3-Oxa-1,5-pentylen; α,ω-Polyoxypropylen mit einem mittleren Molekulargewicht von ca. 200 g/mol oder Trimethylolpropan gestartetes Tris(ω-Polyoxypropylen) mit einem mittleren Molekulargewicht von ca. 390 g/mol. Am meisten bevorzugt steht A für 1,6-Hexylen oder für (1,5,5-Trimethylcyclohexan-1-yl)methan-1,3. Mit 1,6-Hexylen werden besonders hohe Festigkeiten und mit (1,5,5-Trimethylcyclohexan-1-yl)methan-1,3 werden besonders lange Offenzeiten erreicht.

Bevorzugt stehen R¹ und R² jeweils für Methyl.
Bevorzugt steht R³ für Wasserstoff.
Bevorzugt steht R⁴ für einen linearen Alkylrest mit 11 bis 20 C-Atomen, insbesondere für einen linearen Alkylrest mit 11 C-Atomen.
Diese Aldimine sind niedrigviskos und vor, während und nach der hydrolytischen Aktivierung und Vernetzung mit Isocyanaten praktisch geruchlos. Bevorzugt steht m für 0 und n für 2 oder 3, insbesondere für 2.
Für den Fall, dass m für 1 steht, steht n bevorzugt für 1.
Für den Fall, dass m für 1 steht, steht X bevorzugt für O.

Ein Aldimin der Formel (I) ist insbesondere erhältlich aus der Kondensationsreaktion von mindestens einem primären Amin der Formel (II) mit mindestens einem Aldehyd der Formel (III).

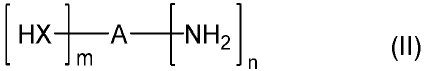

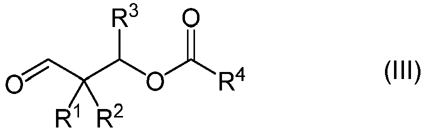

In den Formeln (II) und (III) weisen m, n, A, X, R¹, R², R³ und R⁴ die bereits genannten Bedeutungen auf.

Für diese Kondensationsreaktion wird der Aldehyd der Formel (III) bevorzugt stöchiometrisch oder überstöchiometrisch bezogen auf die primären Aminogruppen des Amins der Formel (II) eingesetzt. Die Umsetzung wird vorteilhaft bei einer Temperatur im Bereich von 15 bis 120 °C durchgeführt, gegebenenfalls in Anwesenheit eines Lösemittels oder auch lösemittelfrei. Das freigesetzte Wasser wird bevorzugt entfernt, zum Beispiel azeotropisch mittels einem geeigneten Lösemittel, oder direkt aus der Reaktionsmischung durch Anlegen von Vakuum.

Geeignete Amine der Formel (II) sind aliphatische, cycloaliphatische und aromatische Amine, insbesondere die Folgenden:
- Aminoalkohole wie insbesondere 2-Aminoethanol, 2-Amino-1-propanol, 1-Amino-2-propanol, 3-Amino-1-propanol, 4-Amino-1-butanol, 4-Amino-2-butanol, 2-Amino-2-methylpropanol, 5-Amino-1-pentanol, 6-Amino-1-hexanol, 7-Amino-1-heptanol, 8-Amino-1-octanol, 10-Amino-1-decanol, 12-Amino-1-dodecanol, 4-(2-Aminoethyl)-2-hydroxyethylbenzol, 3-Aminomethyl-3,5,5-trimethyl-cyclohexanol, eine primäre Aminogruppe tragende Derivate von Glykolen wie Diethylenglykol, Dipropylenglykol, Dibutylenglykol und höheren Oligomeren dieser Glykole, insbesondere 2-(2-Aminoethoxy)ethanol, 2-(2-(2-Aminoethoxy)ethoxy)ethanol oder Produkte aus der einfachen Cyanoethylierung und anschliessender Hydrierung von Glykolen, insbesondere 3-(2-Hydroxyethoxy)propylamin, 3-(2-(2-Hydroxyethoxy)ethoxy)propylamin oder 3-(6-Hydroxyhexyloxy)propylamin;
- primär-sekundäre Amine wie insbesondere N-Methyl-1,2-ethandiamin, N-Ethyl-1,2-ethandiamin, N-Butyl-1,2-ethandiamin, N-Hexyl-1,2-ethandiamin, N-(2-Ethylhexyl)-1,2-ethandiamin, N-Cyclohexyl-1,2-ethandiamin, 4-Aminomethyl-piperidin, 3-(4-Aminobutyl)-piperidin, N-Methyl-1,3-propandiamin, N-Ethyl-1,3-propandiamin, N-Butyl-1,3-propandiamin, N-Hexyl-1,3-propandi-amin, N-(2-Ethylhexyl)-1,3-propandiamin, N-Dodecyl-1,3-propandiamin, N-Cyclohexyl-1,3-propandiamin, 3-Methylamino-1-pentylamin, 3-Ethylamino-1-pentylamin, 3-Butylamino-1-pentylamin, 3-Hexylamino-1-pentylamin, 3-(2-Ethylhexyl)amino-1-pentylamin, 3-Dodecylamino-1-pentylamin, 3-Cyclohe-xylamino-1-pentylamin, Diethylentriamin (DETA), Dipropylentriamin (DPTA), N-(2-Aminoethyl)-1,3-propandiamin (N3-Amin), Bis-hexamethylentriamin (BHMT), N3-(3-Aminopentyl)-1,3-pentandiamin, N5-(3-Aminopropyl)-2-methyl-1,5-pentandiamin oder N5-(3-Amino-1-ethylpropyl)-2-methyl-1,5-pentandiamin;
- primäre Di- und Triamine wie insbesondere Ethylendiamin, 1,2- und 1,3-Propandiamin, 2-Methyl-1,2-propandiamin, 2,2-Dimethyl-1,3-propandiamin, 1,3-Butandiamin, 1,4-Butandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2,4- und 2,4,4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3- und 1,4-Diaminocyclohexan, Bis(4-aminocyclohexyl)methan, Bis(4-amino-3-methylcyclohexyl)methan, Bis(4-amino-3-ethylcyclohexyl)methan, Bis(4-amino-3,5-dimethylcyclohexyl)methan, Bis(4-amino-3-ethyl-5-methylcyclohexyl)methan, 1-Amino-3-aminomethyl-3,5,5-trimethylcyclohexan (= Isophorondiamin), 2- und 4-Methyl-1,3-diaminocyclohexan und Mischungen davon, 1,3-Bis(aminomethyl)cyclohexan, 1,4-Bis(aminomethyl)cyclohexan, 2,5(2,6)-Bis(aminomethyl)bicy-clo[2.2.1]heptan (NBDA), 3(4),8(9)-Bis(aminomethyl)tricyclo[5.2.1.02,6]decan, 1,4-Diamino-2,2,6-trimethylcyclohexan (TMCDA), 1,8-Menthandiamin, 3,9-Bis(3-aminopropyl)-2,4,8,10-tetraoxaspiro[5.5]undecan, 1,3-Bis(aminomethyl)benzol, 1,4-Bis(aminomethyl)benzol, Bis(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 4,7,10-Trioxatridecan-1,13-diamin, cycloaliphatische ethergruppenhaltige Diamine aus der Propoxylierung und nachfolgenden Aminierung von 1,4-Dimethylolcyclohexan, erhältlich insbesondere als Jeffamine® RFD-270 (von Huntsman), Polyoxyalkylenamine mit einem mittleren Molekulargewicht im Bereich von 200 bis 500 g/mol, wie sie im Handel beispielsweise unter den Handelsnamen Jeffamine® (von Huntsman), Polyetheramine (von BASF) und PC Amine® (von Nitroil) erhältlich sind, dadurch gekennzeichnet, dass sie 2-Aminopropyl- oder 2-Aminobutyl-Endgruppen tragen, insbesondere Jeffamine® D-230, Jeffamine® D-400, Jeffamine® XTJ-582, Jeffamine® HK-511, Jeffamine® T-403 oder Jeffamine® XTJ-566 (alle von Huntsman), oder dazu analoge Typen von BASF und Nitroil;
- aromatische Polyamine wie insbesondere 1,3-Phenylendiamin, 1,4-Phenylendiamin, 4,4'-, 2,4' und 2,2'-Diaminodiphenylmethan, 2,4- und 2,6-Toluylendiamin, Mischungen von 3,5-Diethyl-2,4- und -2,6-toluylendiamin (DETDA), 3,5-Dimethylthio-2,4- und -2,6-toluylendiamin, 3,3',5,5'-Tetraethyl-4,4'-diaminodiphenylmethan (M-DEA), 3,3'-Diisopropyl-5,5'-dimethyl-4,4'-diaminodiphenylmethan (M-MIPA) oder 3,3',5,5'-Tetraisopropyl-4,4'-diaminodiphenylmethan (M-DIPA).

Bevorzugte Amine der Formel (II) sind ausgewählt aus der Gruppe bestehend aus 1,5-Diamino-2-methylpentan, 1,6-Hexandiamin, 2,2,4- und 2,4,4-Trimethylhexamethylendiamin, 1,8-Octandiamin, 1,10-Decandiamin, 1,12-Dodecandiamin, 1-Amino-3-aminomethyl-3,5,5-trimethylcyclohexan, 1,3-Bis(aminomethyl)cyclohexan, 1,4-Bis(aminomethyl)cyclohexan, 1,3-Bis(aminomethyl)benzol, 2- und/oder 4-Methyl-1,3-diaminocyclohexan, 2-(2-Aminoethoxy)ethanol, 3,6-Dioxaoctan-1,8-diamin, 4,7-Dioxadecan-1,10-diamin und Polyoxypropylenamine mit einem mittleren Molekulargewicht im Bereich von 200 bis 500 g/mol, insbesondere Jeffamine® D-230, Jeffamine® D-400 und Jeffamine® T-403. Davon bevorzugt sind 1,6-Hexandiamin, 1-Amino-3-aminomethyl-3,5,5-trimethylcyclohexan, 2-(2-Aminoethoxy)ethanol, Polyoxypropylendiamin mit einem mittleren Molekulargewicht von ca. 230 g/mol und Polyoxypropylentriamin mit einem mittleren Molekulargewicht von ca. 440 g/mol.
Am meisten bevorzugt sind 1,6-Hexandiamin und 1-Amino-3-aminomethyl-3,5,5-trimethylcyclohexan.

Ein besonders geeigneter Aldehyd der Formel (III) ist 2,2-Dimethyl-3-lauroyloxypropanal. Dieser Aldehyd ist niedrigviskos und geruchlos.

Geeignete Aldimine der Formel (I) sind insbesondere ausgewählt aus der Gruppe bestehend aus N,N'-Bis(2,2-dimethyl-3-lauroyloxypropyliden)-hexamethylen-1,6-diamin, N,N'-Bis(2,2-dimethyl-3-lauroyloxypropyliden)-3-aminomethyl-3,5,5-trimethylcyclohexylamin, N-2,2-Dimethyl-3-lauroyloxypropyliden-2-(2-aminoethoxy)ethanol, N,N'-Bis(2,2-dimethyl-3-lauroyloxypropylidene)polyoxypropylendiamin mit einem mittleren Molekulargewicht im Bereich von 710 bis 810 g/mol und N,N',N"-Tris(2,2-dimethyl-3-lauroyloxypropyliden)-polyoxypropylenetriamin mit einem mittleren Molekulargewicht im Bereich von 1'190 bis 1'290 g/mol.
Besonders geeignete Aldimine der Formel (I) sind N,N'-Bis(2,2-dimethyl-3-lauroyloxypropyliden)-hexamethylen-1,6-diamin und/oder N,N'-Bis(2,2-dimethyl-3-lauroyloxypropyliden)-3-aminomethyl-3,5,5-trimethylcyclohexylamin. Mit diesen Aldiminen werden Zusammensetzungen mit sehr hohen Festigkeiten erhalten. Dabei werden insbesondere mit N,N'-Bis(2,2-dimethyl-3-lauroyloxypropyliden)-hexamethylen-1,6-diamin besonders hohe Festigkeiten erhalten, und mit N,N'-Bis(2,2-dimethyl-3-lauroyloxypropyliden)-3-aminomethyl-3,5,5-trimethylcyclohexylamin werden besonders lange Offenzeiten erhalten.

Das Aldimin der Formel (I) kann als Bestandteil der ersten Komponente oder als Bestandteil der zweiten Komponente oder in beiden Komponenten vorhanden sein. Bevorzugt ist es ein Bestandteil der ersten Komponente.

Für den Fall, dass m für 1 steht, ist das Aldimin der Formel (I) entweder ein Bestandteil der ersten Komponente, oder es liegt in der zweiten Komponente in mit MDI umgesetzter Form vor, insbesondere wie in der folgenden Formel dargestellt:

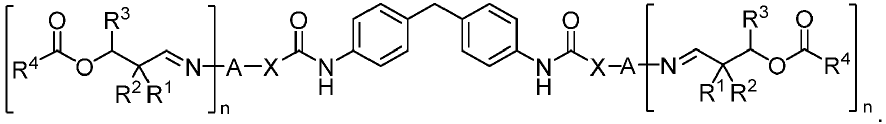

Das Aldimin der Formel (I) liegt in der Zusammensetzung bevorzugt in einer solchen Menge vor, dass 5% bis 50%, bevorzugt 10% bis 40%, der vorhandenen Isocyanatgruppen über das Aldimin der Formel (I) vernetzen können.

Die Zusammensetzung enthält weiterhin mindestens eine Zirkonium(IV)-Verbindung als Katalysator, insbesondere für die Reaktion der Hydroxylgruppen mit Isocyanatgruppen.
Die Zirkonium(IV)-Verbindung kann als Bestandteil der ersten Komponente oder als Bestandteil der zweiten Komponente oder in beiden Komponenten vorhanden sein. Bevorzugt ist sie ein Bestandteil der ersten Komponente. Bevorzugte Zirkonium(IV)-Verbindungen sind Zirkonium(IV)-Komplexverbindungen. Damit härtet die Zusammensetzung bei langer Offenzeit besonders rasch zu einem nicht-klebrigen Material mit hoher Endfestigkeit. Zirkonium(IV)-Komplexverbindungen sind nach bekannten Verfahren ausgehend von beispielsweise Zirkonium(IV)-oxid herstellbar.
Geeignete Liganden sind insbesondere
- Alkoholate, insbesondere Methanolat, Ethanolat, Propanolat, Isopropanolat, Butanolat, tert.Butanolat, Isobutanolat, Pentanolat, Neopentanolat, Hexanolat oder Octanolat;
- Carboxylate, insbesondere Formiat, Acetat, Propionat, Butanoat, Isobutanoat, Pentanoat, Hexanoat, Cyclohexanoat, Heptanoat, Octanoat, 2-Ethylhexanoat, Nonanoat, Decanoat, Neodecanoat, Undecanoat, Dodecanoat, Lactat, Oleat, Citrat, Benzoat, Salicylat oder Phenylacetat;
- 1,3-Diketonate, insbesondere Acetylacetonat (2,4-Pentandionat), 2,2,6,6-Tetramethyl-3,5-heptandionat, 1,3-Diphenyl-1,3-propandionat (Dibenzoylmethanat), 1-Phenyl-1,3-butanandionat oder 2-Acetylcyclohexanonat;
- Oxinat;
- 1,3-Ketoesterate, insbesondere Methylacetoacetat, Ethylacetoacetat, Ethyl-2-methylacetoacetat, Ethyl-2-ethylacetoacetat, Ethyl-2-hexylacetoacetat, Ethyl-2-phenylacetoacetat, Propylacetoacetat, Isopropylacetoacetat, Butylacetoacetat, tert.Butylacetoacetat, Ethyl-3-oxo-valerat, Ethyl-3-oxo-hexanoat oder 2-Oxo-cyclohexancarbonsäureethylesterat; und
- 1,3-Ketoamidate, insbesondere N,N-Diethyl-3-oxo-butanamidat, N,N-Dibutyl-3-oxo-butanamidat, N,N-Bis(2-ethylhexyl)-3-oxo-butanamidat, N,N-Bis(2-methoxyethyl)-3-oxo-butanamidat, N,N-Dibutyl-3-oxo-heptanamidat, N,N-Bis(2-methoxyethyl)-3-oxo-heptanamidat, N,N-Bis(2-ethylhexyl)-2-oxo-cyclopentancarboxamidat, N,N-Dibutyl-3-oxo-3-phenylpropanamidat, N,N-Bis(2-methoxyethyl)-3-oxo-3-phenylpropanamidat oder N-Polyoxyalkylen-1,3-ketoamidate wie insbesondere Acetoamidate von Polyoxyalkylenaminen mit ein, zwei oder drei Aminogruppen und einem Molekulargewicht bis 5000 g/mol, insbesondere den von Huntsman unter dem Handelsnamen Jefifamine® erhältlichen Typen SD-231, SD-401, SD-2001, ST-404, D-230, D-400, D-2000, T-403, M-600 und XTJ-581.

Bevorzugte Zirkonium(IV)-Komplexverbindungen sind ausgewählt aus der Gruppe bestehend aus Zirkonium(IV)-tetrakis(acetat), Zirkonium(IV)-tetrakis(octanoat), Zirkonium(IV)-tetrakis(2-ethylhexanoat), Zirkonium(IV)-tetrakis(neodecanoat), Zirkonium(IV)-tetrakis(acetylacetonat), Zirkonium(IV)-tetrakis(1,3-diphenylpropan-1,3-dionat), Zirkonium(IV)-tetrakis(ethylacetoacetat), Zirkonium(IV)-tetrakis(N,N-diethyl-3-oxo-butanamidat) und Zirkonium(IV)-Komplexverbindungen mit verschiedenen dieser genannten Liganden.

Besonders bevorzugte Zirkonium(IV)-Komplexverbindungen enthalten mindestens einen Chelat-Liganden wie insbesondere 1,3-Diketonat, 1,3-Ketoesterat oder 1,3-Ketoamidat.

Die erste Komponente der Zusammensetzung kann zusätzlich mindestens einen Diol-Kettenverlängerer enthalten, welcher insbesondere ein aliphatisches oder cycloaliphatisches Diol mit einem Molekulargewicht im Bereich von 60 bis 200 g/mol darstellt und bevorzugt mindestens eine primäre Hydroxylgruppe aufweist.
Geeignete Diol-Kettenverlängerer sind ausgewählt aus der Gruppe bestehend aus 1,2-Ethandiol, 1,2-Propandiol, 1,3-Propandiol, 1,2-Butandiol, 1,3-Butandiol, 1,4-Butandiol, 2,3-Butandiol, 2-Methyl-1,3-propandiol, 1,5-Pentandiol, 1,2-Pentandiol, 2,4-Pentandiol, 2-Methyl-1,4-pentandiol, 2,2-Dimethyl-1,3-propandiol (Neopentylglykol), 1,6-Hexandiol, 1,2-Hexandiol, 3-Methyl-1,5-pentandiol, 1,8-Octandiol, 1,2-Octandiol, 3,6-Octandiol, 2-Ethyl-1,3-hexandiol, 2,2,4-Trimethyl-1,3-pentandiol, 2-Butyl-2-ethyl-1,3-propandiol, 2,7-Dimethyl-3,6-octandiol, 1,4-Cyclohexandiol, 1,3-Cyclohexandimethanol, 1,4-Cyclohexandimethanol, Diethylenglykol und Dipropylenglykol.
Davon besonders bevorzugt sind bei Raumtemperatur flüssige Typen mit primären OH-Gruppen, insbesondere 1,2-Ethandiol, 1,3-Propandiol, 1,4-Butandiol, 2-Methyl-1,3-propandiol, 1,5-Pentandiol, 3-Methyl-1,5-pentandiol oder Diethylenglykol.
Als Diol-Kettenverlängerer am meisten bevorzugt ist 1,4-Butandiol.
Der Diol-Kettenverlängerer ermöglicht hohe Endfestigkeiten, wobei aber darauf geachtet werden muss, dass nur soviel Diol-Kettenverlängerer eingesetzt wird, dass die Offenzeit der Zusammensetzung nicht zu kurz wird.

Die Zusammensetzung enthält bevorzugt zusätzlich mindestens einen Katalysator für die Hydrolyse des Aldimins. Dafür geeignet sind insbesondere organische Säuren, insbesondere Carbonsäuren wie Benzoesäure, Salicylsäure oder 2-Nitrobenzoesäure, organische Carbonsäureanhydride wie Phthalsäureanhydrid, Hexahydrophthalsäureanhydrid und Hexahydromethylphthalsäureanhydrid, Silylester von organischen Carbonsäuren, organische Sulfonsäuren wie Methansulfonsäure, p-Toluolsulfonsäure oder 4-Dodecylbenzolsulfonsäure, Sulfonsäureester, andere organische oder anorganische Säuren, oder Mischungen der vorgenannten Säuren und Säureester. Besonders bevorzugt sind Carbonsäuren, insbesondere aromatische Carbonsäuren wie Benzoesäure, 2-Nitrobenzoesäure und insbesondere Salicylsäure.
Der Katalysator für die Hydrolyse des Aldimins kann als Bestandteil der ersten Komponente oder als Bestandteil der zweiten Komponente oder in beiden Komponenten vorhanden sein. Bevorzugt ist er ein Bestandteil der ersten Komponente.

Die Zusammensetzung kann als Bestandteil der ersten Komponente zusätzlich Wasser oder eine Wasser erzeugende Substanz enthalten, insbesondere in einer solchen Menge, dass das Verhältnis zwischen der Anzahl der Wassermoleküle und der Anzahl Aldiminogruppen mehr als 0.25, bevorzugt mindestens 0.5, beträgt.
Wasser kann entweder in Form von Restfeuchtigkeit mit in der Zusammensetzung vorhandenen Substanzen wie insbesondere Polyolen, Füllstoffen, Weichmachern oder Vernetzern in die erste Komponente gelangt sein, oder es wird der Zusammensetzung zugesetzt, entweder als Bestandteil der ersten Komponente oder bei der Vermischung der beiden Komponenten oder bei der Applikation der vermischten Zusammensetzung.
Wasser kann entweder in freier Form vorliegen, oder es kann an ein Trägermaterial gebunden sein. Die Bindung an ein gegebenenfalls vorhandenes Trägermaterial ist dabei reversibel, das heisst, das Wasser ist für die Hydrolyse der Aldiminogruppen zugänglich.
Eine solche Zusammensetzung härtet auch dann rasch und zuverlässig aus, wenn der Zutritt von Feuchtigkeit aus der Umgebung erschwert ist, beispielsweise aufgrund der Klebegeometrie.
Für den Fall, dass die erste Komponente der Zusammensetzung zusätzlich Wasser oder eine Wasser erzeugende Substanz enthält, ist die Zirkonium(IV)-Verbindung bevorzugt ein Bestandteil der zweiten Komponente. Auf diese Weise kann die Zirkonium(IV)-Verbindung vor dem Vermischen der Zusammensetzung nicht durch Hydrolyseprozesse deaktiviert werden.

Die Zusammensetzung kann als Bestandteil der ersten Komponente zusätzlich weitere mit Isocyanatgruppen reaktionsfähige Substanzen enthalten. Insbesondere kann die erste Komponente geringe Mengen von primären Aminen enthalten, insbesondere um mit dem Vermischen der beiden Komponenten unmittelbar ein strukturviskoses, weniger stark abfliessendes oder abrutschendes Material zu erhalten. Dafür geeignete primäre Amine sind insbesondere 1,5-Diamino-2-methylpentan, 2,2(4),4-Trimethylhexamethylendiamin, 1,8-Octandiamin, 1,10-Decandiamin, 1,12-Dodecandiamin, 1-Amino-3-aminomethyl-3,5,5-trimethylcyclohexan, 2- und 4-Methyl-1,3-diaminocyclohexan und Mischungen davon, 1,3-Bis-(aminomethyl)cyclohexan, 1,4-Bis-(aminomethyl)-cyclohexan, 4,4`-Methylen-bis(cyclohexylamin), Bis-(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 1,3-Bis-(aminomethyl)benzol oder ein Polyetheramin wie insbesondere Jeffamine® D-230, D-400 oder T-403 (von Huntsman).

Die Zusammensetzung kann zusätzlich weitere für elastische zweikomponentige Polyurethan-Klebstoffe gebräuchliche Zusätze enthalten. Insbesondere können die folgenden Hilfs- und Zusatzstoffe vorhanden sein:
- anorganische und organische Füllstoffe, insbesondere gemahlene oder gefällte Calciumcarbonate, welche gegebenenfalls mit Fettsäuren, insbesondere Stearaten, beschichtet sind, Baryt (Schwerspat), Quarzmehle, Quarzsand, Dolomite, Wollastonite, Kaoline, calcinierte Kaoline, Schichtsilikate wie Glimmer oder Talk, Zeolithe, Aluminiumhydroxide, Magnesiumhydroxid, Kieselsäuren inklusiv hochdisperse Kieselsäuren aus Pyrolyseprozessen, Zemente, Gipse, Flugaschen, industriell hergestellte Russe, Graphit, MetallPulver wie Aluminium, Kupfer, Eisen, Silber oder Stahl, PVC-Pulver oder Hohlkugeln;
- Fasern, insbesondere Glasfasern, Kohlefasern, Metallfasern, Keramikfasern, Kunststofffasern wie Polyamidfasern oder Polyethylenfasern oder Naturfasern;
- Farbstoffe;
- anorganische oder organische Pigmente, beispielsweise Titandioxid, Chromoxid oder Eisenoxide;
- Weichmacher, insbesondere Phthalate, Trimellitate, Adipate, Sebacate, Azelate, Citrate, Benzoate, Diester von ortho-Cyclohexandicarbonsäure, acetyliertes Glycerin oder Monoglyceride, oder Kohlenwasserstoffharze;
- nicht-reaktive thermoplastische Polymere, wie beispielsweise Homo- oder Copolymere von ungesättigten Monomeren, insbesondere aus der Gruppe umfassend Ethylen, Propylen, Butylen, Isobutylen, Isopren, Vinylacetat und Alkyl(meth)acrylate, insbesondere Polyethylene (PE), Polypropylene (PP), Polyisobutylene, Ethylenvinylacetat-Copolymere (EVA) und ataktische Poly-α-Olefine (APAO);
- Lösemittel;
- Rheologie-Modifizierer, insbesondere Verdickungsmittel oder Thixotropiermittel, zum Beispiel Schichtsilikate wie Bentonite, Derivate von Rizinusöl, hydriertes Rizinusöl, Polyamide, Polyamidwachse, Polyurethane, Harnstoffverbindungen, pyrogene Kieselsäuren, Celluloseether und hydrophob modifizierte Polyoxyethylene;
- Trocknungsmittel, wie beispielsweise Molekularsiebe, Calciumoxid, hochreaktive Isocyanate wie p-Tosylisocyanat, monomere Diisocyanate, Mono-Oxazolidine wie Incozol® 2 (von Incorez), Orthoameisensäureester, Alkoxysilane wie Tetraethoxysilan, Organoalkoxysilane wie Vinyltrimethoxysilan;
- Haftvermittler, beispielsweise Organoalkoxysilane wie Aminosilane, Mercaptosilane, Epoxysilane, Vinylsilane, (Meth)acrylsilane, Isocyanatosilane, Carbamatosilane, Alkylsilane, S-(Alkylcarbonyl)mercaptosilane und Aldiminosilane, sowie oligomere Formen dieser Silane;
- weitere Katalysatoren, welche die Reaktion der Isocyanatgruppen beschleunigen, insbesondere Verbindungen von Zinn, Eisen, Bismut, Zink, Mangan, Chrom, Kobalt, Kupfer, Nickel, Molybdän, Blei, Cadmium, Quecksilber, Antimon, Vanadium, Titan und Kalium, insbesondere Organozinn(IV)-Verbindungen wie Dibutylzinndiacetat, Dibutylzinndilaurat, Dimethylzinndilaurat, Dibutylzinndichlorid, Dibutylzinndiacetylacetonat oder Dioctylzinndilaurat, Bismut(III)-Komplexverbindungen, Zink(II)-acetat, Zink(II)-2-ethylhexanoat, Zink(II)-laurat, Zink(II)-acetylacetonat, Kobalt(II)-2-ethylhexanoat, Kupfer(II)-2-ethylhexanoat, Nickel(II)-naphthenat, Aluminiumlactat, Aluminiumoleat, Diisopropoxytitan-bis-(ethylacetoacetat) und Kaliumacetat; tertiäre Aminogruppen enthaltende Verbindungen, insbesondere 2,2'-Dimorpholinodiethylether, N-Ethyl-diisopropylamin, N,N,N',N'-Tetramethylalkylendiamine, Pentamethylalkylentriamine und höhere Homologe davon, Bis-(N,N-diethylaminoethyl)-adipat, Tris-(3-dimethylaminopropyl)amin, 1,4-Diazabicyclo[2.2.2]octan (DABCO), 1,8-Diazabicyclo[5.4.0]undec-7-en (DBU), 1,5-Diazabicyclo[4.3.0]-non-5-en (DBN), N-Alkylmorpholine, N,N'-Dimethylpiperazin; stickstoffaromatische Verbindungen wie 4-Dimethylamino-pyridin, N-Methylimidazol, N-Vinylimidazol oder 1,2-Dimethylimidazol; organische Ammoniumverbindungen wie Benzyltrimethylammoniumhydroxid oder alkoxylierte tertiäre Amine; sogenannte "delayed action"-Katalysatoren, welche Modifizierungen bekannter Metall- oder Aminkatalysatoren darstellen; sowie Kombinationen der genannten Verbindungen, insbesondere von Metallverbindungen und tertiären Aminen;
- Stabilisatoren gegen Oxidation, Wärme, Licht- und UV-Strahlung;
- flammhemmende Substanzen, insbesondere die bereits genannten Füllstoffe Aluminiumhydroxid und Magnesiumhydroxid, sowie insbesondere organische Phosphorsäureester wie insbesondere Triethylphosphat, Trikresylphosphat, Triphenylphosphat, Diphenylkresylphosphat, Isodecyldiphenylphosphat, Tris(1,3-dichlor-2-propyl)phosphat, Tris(2-chlorethyl)phosphat, Tris(2-ethylhexyl)phosphat, Tris(chlorisopropyl)phosphat, Tris(chlorpropyl)-phosphat, isopropyliertes Triphenylphosphat, Mono-, Bis- und Tris(isopropylphenyl)phosphate unterschiedlichen Isopropylierungsgrades, Resorcinolbis(diphenylphosphat), Bisphenol-A-bis(diphenylphosphat) oder Ammoniumpolyphosphate, Melamin und Melaminderivate wie Phosphate oder Isocyanurate, expandierende Graphite, Zinkborate oder Antimontrioxid;
- oberflächenaktive Substanzen, insbesondere Netzmittel, Verlaufsmittel, Entlüftungsmittel oder Entschäumer; sowie
- Biozide wie beispielsweise Algizide, Fungizide oder das Pilzwachstum hemmende Substanzen.

Solche Zusätze können als Bestandteil der ersten oder der zweiten Komponente vorhanden sein. Mit Isocyanatgruppen reaktive Substanzen sind bevorzugt ein Bestandteil der ersten Komponente. Es kann sinnvoll sein, gewisse Bestandteile vor dem Einmischen in die jeweilige Komponente chemisch oder physikalisch zu trocknen.

Bevorzugte Zusätze sind Füllstoffe, Rheologie-Modifizierer, Haftvermittler, Trocknungsmittel oder Stabilisatoren gegen UV-Licht und/oder Oxidation.

Die Zusammensetzung ist bevorzugt im Wesentlichen frei von leichtflüchtigen Lösemitteln. Insbesondere enthält sie höchstens 1 Gewichts-%, bevorzugt höchstens 0.5 Gewichts-%, an leichtflüchtigen Lösemitteln, besonders bevorzugt ganz frei von leichtflüchtigen Lösemitteln. Als "leichtflüchtiges Lösemittel" wird dabei eine flüssige organische Verbindung mit einem Dampfdruck von mindestens 0.01 kPa bei einer Temperatur von 293.14 K bezeichnet, welche gegenüber Isocyanaten nicht reaktiv ist.

Das Verhältnis der gegenüber Isocyanatgruppen reaktiven Gruppen wie insbesondere Hydroxylgruppen, primären und sekundären Aminogruppen und Aldiminogruppen zu den Isocyanatgruppen liegt in der Zusammensetzung geeigneterweise im Bereich von 0.5 bis 1.1, bevorzugt im Bereich von 0.7 bis 1.05, besonders bevorzugt im Bereich von 0.8 bis 1.0.

Die gesamte Zusammensetzung weist vor der Aushärtung bevorzugt einen Gehalt an freien Isocyanatgruppen von höchstens 8 Gewichts-%, besonders bevorzugt höchstens 6 Gewichts-%, insbesondere höchstens 4 Gewichts-%, auf. Eine solche Zusammensetzung weist eine lange Offenzeit auf und härtet schnell und weitgehend ohne Blasenbildung zu einem elastischen Material mit hoher Festigkeit aus.

Beide Komponenten der Zusammensetzung weisen geeigneterweise eine solche Konsistenz auf, dass sie mit einfachen Verfahren gut vermischt werden können. Dazu sind sowohl flüssige als auch pastöse Komponenten geeignet, wobei die Viskosität der flüssigen oder pastösen Komponenten bei Raumtemperatur vergleichsweise niedrig ist. Somit kann die Dosierung und Vermischung von Hand oder mit handelsüblichen Dosiersystemen und dynamischen oder statischen Mischern auf einfache Weise erfolgen.

Die erste und die zweite Komponente der Zusammensetzung werden getrennt voneinander hergestellt. Dabei werden die Bestandteile der jeweiligen Komponente unter Ausschluss von Feuchtigkeit miteinander vermischt, so dass eine makroskopisch homogene Masse entsteht. Jede Komponente wird in einem separaten feuchtigkeitsdichten Gebinde gelagert. Ein geeignetes Gebinde ist insbesondere ein Fass, ein Container, ein Hobbock, ein Eimer, ein Kanister, eine Büchse, ein Beutel, ein Schlauchbeutel, eine Kartusche oder eine Tube. Die Komponenten sind lagerstabil, das heisst, dass sie vor ihrer Anwendung während mehreren Monaten bis zu einem Jahr und länger im jeweiligen Gebinde aufbewahrt werden können, ohne dass sich ihre Eigenschaften in einem für ihren Gebrauch relevanten Ausmass verändern.
Zur Anwendung der Zusammensetzung werden die beiden Komponenten kurz vor oder während der Applikation miteinander vermischt. Das Mischungsverhältnis wird bevorzugt so gewählt, dass die gegenüber Isocyanaten reaktiven Gruppen in einem geeigneten Verhältnis zu den Isocyanatgruppen stehen, wie vorgängig beschrieben. In Gewichtsteilen liegt das Mischungsverhältnis zwischen der ersten und der zweiten Komponente typischerweise im Bereich von etwa 1:2 bis 20:1, insbesondere 1:1 bis 10:1.
Das Vermischen der beiden Komponenten erfolgt typischerweise über einen Statikmischer oder mit Hilfe von dynamischen Mischern. Das Vermischen kann kontinuierlich oder batchweise erfolgen. Beim Mischen ist darauf zu achten, dass die zwei Komponenten möglichst homogen vermischt werden. Bei einer unzureichenden Vermischung treten lokale Abweichungen vom vorteilhaften Mischungsverhältnis auf, was sich in einer Verschlechterung der mechanischen Eigenschaften und/oder Blasenbildung auswirken kann. Wird vor der Applikation vermischt, so muss darauf geachtet werden, dass zwischen dem Vermischen der Komponenten und der Applikation nicht zu viel Zeit vergeht, damit es nicht zu Störungen wie beispielsweise einem verlangsamten oder unvollständigen Aufbau der Haftung zum Substrat kommt. Insbesondere soll die Offenzeit der Zusammensetzung während der Applikation nicht überschritten werden.
Als "Offenzeit" oder auch "Topfzeit" wird dabei die Zeitspanne zwischen dem Vermischen der Komponenten und dem Ende eines für die Verarbeitung geeigneten Zustands der Zusammensetzung bezeichnet. Ein typisches Mass für das Ende der Topfzeit kann eine Verdoppelung der Viskosität sein.
Das Vermischen erfolgt insbesondere bei Umgebungstemperatur, welche typischerweise im Bereich von etwa 5 bis 50 °C, bevorzugt bei etwa 10 bis 35 °C, liegt.
Mit dem Vermischen der beiden Komponenten beginnt die Aushärtung durch chemische Reaktion. Dabei reagieren vorhandene Hydroxylgruppen und primäre und sekundäre Aminogruppen mit vorhandenen Isocyanatgruppen. Aldiminogruppen reagieren mit vorhandenen Isocyanatgruppen, sobald sie mit Feuchtigkeit in Kontakt kommen. Das zur Hydrolyse der Aldiminogruppen benötigte Wasser kann dabei, zumindest teilweise, in der Zusammensetzung vorhanden sein, oder es diffundiert von aussen in Form von Feuchtigkeit aus der Umgebung, insbesondere in Form von Luftfeuchtigkeit, in die vermischte Zusammensetzung. Überschüssige Isocyanatgruppen reagieren mit vorhandener Feuchtigkeit. Als Resultat dieser Reaktionen härtet die Zusammensetzung zu einem festen Material aus. Dieser Vorgang wird auch als Vernetzung bezeichnet. Aus den Aldiminogruppen freigesetzter Aldehyd verbleibt während und nach der Aushärtung in der Zusammensetzung, wo er im Material als weitgehend geruchlose Substanz eine gewisse weichmachende Wirkung ausübt. Aufgrund seiner hervorragenden Verträglichkeit in der Zusammensetzung zeigt er keinerlei Tendenz zu Separation oder Migration.

Weiterhin betrifft die Erfindung eine ausgehärtete Zusammensetzung, erhalten aus einer Zusammensetzung, wie sie vorhergehend beschrieben worden ist, nach dem Vermischen der beiden Komponenten und deren Aushärtung.

Die Erfindung betrifft weiterhin die Verwendung der beschriebenen Zusammensetzung als elastischer Klebstoff für Klebe- und Abdichtungsanwendungen, insbesondere in der Bau- und Fertigungsindustrie sowie im Fahrzeugbau, insbesondere für die Parkettverklebung, Anbauteilverklebung, Hohlraumversiegelung, Montage, Modulverklebung, Karosserieverklebung, Scheibenverklebung, Fugenabdichtung oder Verankerung.
Elastische Verklebungen im Fahrzeugbau sind beispielsweise das Ankleben von Teilen wie Kunststoffabdeckungen, Zierleisten, Flansche, Stosstangen, Führerkabinen oder andere Anbauteile, an die lackierte Karosserie eines Fahrzeugs, oder das Einkleben von Scheiben in die Karosserie, wobei als Fahrzeuge Automobile, Lastkraftwagen, Busse, Schienenfahrzeuge oder Schiffe genannt werden sollen.

Für elastische Verklebungen weist die Zusammensetzung nach dem Vermischen bevorzugt eine pastöse Konsistenz mit strukturviskosen Eigenschaften auf. Ein solcher Klebstoff wird mittels einer geeigneten Vorrichtung auf das Substrat aufgetragen, bevorzugt in Form einer Raupe, wobei diese eine im Wesentlichen runde oder dreieckige Querschnittsfläche aufweisen kann. Geeignete Methoden zum Auftragen des Klebstoffes sind beispielsweise die Applikation aus handelsüblichen Zweikomponenten-Kartuschen, welche manuell oder mittels Druckluft betrieben werden, oder aus Fässern oder Hobbocks mittels Dosier- und Förderpumpen oder Extrudern, gegebenenfalls mittels eines Applikations-Roboters. Die Vermischung der Komponenten erfolgt dabei wie bereits beschrieben.

Weiterhin betrifft die Erfindung ein Verfahren zum Verkleben von einem ersten Substrat mit einem zweiten Substrat, welches die Schritte umfasst:
- Applizieren der beschriebenen vermischten Zusammensetzung auf ein erstes Substrat,
- Kontaktieren der applizierten Zusammensetzung mit einem zweiten Substrat innerhalb der Offenzeit der Zusammensetzung,
oder
- Applizieren der beschriebenen vermischten Zusammensetzung auf ein erstes und auf ein zweites Substrat,
- Kontaktieren der applizierten Zusammensetzung auf den beiden Substraten miteinander innerhalb der Offenzeit der Zusammensetzung,
gefolgt von einer gewissen Zeitspanne des Aushärtens der Zusammensetzung, während derer die Verklebung gegebenenfalls so fixiert ist, dass sich die beiden Substrate nicht gegeneinander verschieben können.
Das erste und das zweite Substrat können dabei aus dem gleichen oder einem unterschiedlichen Material bestehen.
Das Applizieren der vermischten Zusammensetzung erfolgt dabei bevorzugt bei Umgebungstemperatur.
Das Aushärten erfolgt bevorzugt ebenfalls bei Umgebungstemperatur. Es ist aber auch möglich, dass die Verklebung während des Aushärtens erhitzt wird.

Geeignete Substrate, welche mit der Zusammensetzung verklebt werden können, sind insbesondere
- Glas, Glaskeramik, Beton, Mörtel, Backstein, Ziegel, Gips und Natursteine wie Granit oder Marmor;
- Metalle und Legierungen wie Aluminium, Kupfer, Eisen, Stahl, Buntmetalle, inklusive oberflächenveredelte Metalle und Legierungen wie verzinkte oder verchromte Metalle;
- Leder, Textilien, Papier, Holz, mit Harzen, beispielsweise Phenol-, Melamin-oder Epoxidharzen, gebundene Holzwerkstoffe, Harz-Textil-Verbundwerkstoffe und weitere sogenannte Polymer-Composites;
- Kunststoffe wie Hart- und Weich-PVC, ABS, PC, PA, Polyester, PMMA, SAN, Epoxidharze, Phenolharze, PUR, POM, PO, PE, PP, EPM oder EPDM, jeweils unbehandelt oder oberflächenbehandelt mittels Plasma, Corona oder Flammen;
- Faserverstärkte Kunststoffe, wie Kohlefaser-verstärkte Kunststoffe (CFK), Glasfaser-verstärkte Kunststoffe (GFK) und Sheet Moulding Compounds (SMC);
- beschichtete Substrate, wie pulverbeschichtete Metalle oder Legierungen;
- Farben und Lacke, insbesondere Automobildecklacke.

Die Substrate können bei Bedarf vor dem Applizieren der Zusammensetzung vorbehandelt werden, beispielsweise durch physikalische und/oder chemische Reinigungsverfahren, beispielsweise Schleifen, Sandstrahlen, Kugelstrahlen, Bürsten, Absaugen oder Abblasen, Hoch- oder Höchstdruckwasserstrahlen und/oder durch Behandeln mit Reinigern oder Lösemitteln und/oder das Aufbringen eines Haftvermittlers, einer Haftvermittlerlösung oder eines Primers.

Bei der Applikation und Aushärtung entsteht ein Artikel, welcher mit der beschriebenen Zusammensetzung verklebt oder abgedichtet wurde. Beim Artikel handelt es sich insbesondere um ein Bauwerk, insbesondere ein Bauwerk des Hoch- oder Tiefbaus oder einen Anbauteil davon wie beispielsweise ein Fenster, ein Treppenhaus oder eine Fassade, oder um ein industriell gefertigtes Gut wie beispielsweise eine Waschmaschine, oder um ein Fahrzeug oder ein Anbauteil davon.

Die beschriebene Zusammensetzung zeichnet sich durch vorteilhafte Eigenschaften aus. Ihre Komponenten sind lange haltbar, d.h. weisen über die Lagerzeit nur geringfügige Änderungen in ihren Applikations- und Vernetzungseigenschaften auf. Sie ist einfach verarbeitbar, da ihre Komponenten eine so niedrige Viskosität aufweisen, dass sie gut miteinander mischbar sind, und sie weist nach dem Mischen eine lange Offenzeit auf, die es erlaubt, auch bei erhöhter Umgebungstemperatur oder warmen Substraten grosse Klebungen mit langen Klebefugen und/oder komplexer Geometrie vorzunehmen und ausreichend lange nach dem Fügen noch Positionskorrekturen ermöglicht. Die Aushärtung verläuft trotz der langen Offenzeit ohne Störungen durch Blasenbildung und führt rasch zu einem elastischen Material mit nichtklebriger Oberfläche. Dabei baut der Klebstoff schnell Festigkeit und Haftung auf, wodurch bald nach der Klebung allfällige Fixierhilfen entfernt werden können und das geklebte Objekt bewegt und mechanisch belastet werden kann. Nach der Aushärtung weist der Klebstoff eine hohe Endfestigkeit bei guter Dehnbarkeit auf und ist temperatur- und witterungsbeständig. Bei manchen Klebeanwendungen, insbesondere im industriellen Leichtbau, ist die vergleichsweise niedrige spezifische Dichte des Klebstoffs vorteilhaft. Schliesslich ist die Zusammensetzung aufgrund der Abwesenheit von organischen Lösemitteln, leichtflüchtigen Isocyanaten und leichtflüchtigen Blockierungsmitteln oder giftigen Katalysatoren wenig toxisch und geruchsarm, was sowohl für den Klebstoff-Verarbeiter als auch für den Nutzer des verklebten Objekts und für die Umwelt vorteilhaft ist.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### 1. Verwendete kommerzielle Substanzen:

| | |
|---|---|
| Lupranol® 4003/1 | EO-endcapped Polyoxypropylentriol mit 45 Gew.-% gepfropftem SAN-Polymer, OH-Zahl 20.0 mg KOH/g (von BASF) |
| Desmophen® 5028 GT | EO-endcapped Polyoxypropylentriol mit 20 Gew.-% PHD-Polymer, OH-Zahl 28.5 mg KOH/g (von Bayer MaterialScience) |
| Voranol® CP 4755 | EO-endcapped Polyoxypropylentriol, OH-Zahl 34.7 mg KOH/g (von Dow) |
| Desmodur® CD | modifiziertes Diphenylmethan-4,4'-diisocyanat enthaltend MDI-Carbodiimid-Addukte, bei Raumemperatur flüssig, NCO-Gehalt 28 Gewichts-% (von Bayer MaterialScience) |
| Kreide | Omya® BLH (von Omya) |
| Kaolin | Satintone® W/Whitetex® (von Engelhard) |
| Molekularsieb | Molekularsiebpulver 3Å (von Zeochem) |
| Kieselsäure | pyrogene Kieselsäure, hydrophob modifiziert |
| K-Kat® A-209 | Zirkonium(IV)-Chelat-Komplex in Reaktivverdünner und tert.Butylacetat, Zirkonium-Gehalt 3.5 Gewichts-% (von King Industries) |
| K-Kat® XC-227 | Bismut(III)-carboxylat, Bismut-Gehalt 12.0 Gewichts-% (von King Industries) |
| DABCO | 1,4-Diazabicyclo[2.2.2]octan, 33.0 Gewichts-% in Dipropylenglykol (von Air Products) |
| DBTDL | Dibutylzinndilaurat (von Sigma Aldrich), 10 Gewichts-% |
| | in Disodecylphthalat |
| MXDA | 1,3-Bis-(aminomethyl)benzol (von Sigma Aldrich) |

### 2. Herstellung von Substanzen:

Der **Amingehalt** (totaler Gehalt von freien und blockierten Aminogruppen inklusive Aldiminogruppen) wurde bestimmt mittels Titration (mit 0.1_{N} HClO₄ in Essigsäure gegen Kristallviolett) und ist angegeben in mmol N/g.

**Aldimin-1:** N,N'-Bis(2,2-dimethyl-3-lauroyloxypropyliden)-hexamethylen-1,6-diamin
622 g (2.2 mol) 2,2-Dimethyl-3-lauroyloxypropanal wurden in einem Rundkolben unter Stickstoffatmosphäre vorgelegt. Unter Rühren wurden 166.0 g (1 mol) Hexamethylen-1,6-diamin-Lösung (70 Gew.-% in Wasser) zugegeben und anschliessend die flüchtigen Bestandteile bei 80 °C und 10 mbar Vakuum entfernt. Es wurden 702 g einer fast farblosen Flüssigkeit mit einem Amingehalt von 2.85 mmol N/g, was einem berechneten Equivalentgewicht von ca. 351 g/Eq entspricht, erhalten.

**Aldimin-2:** N,N'-Bis(2,2-dimethyl-3-lauroyloxypropyliden)-3-aminomethy1-3,5,5-trimethylcyclohexylam in
Wie für Aldimin-1 beschrieben wurden 598 g (2.1 mol) 2,2-Dimethyl-3-lauroyloxy-propanal und 170.3 g (1 mol) 3-Aminomethyl-3,5,5-trimethylcyclohexylamin (Vestamin® IPD von Evonik)umgesetzt. Es wurden 732 g einer fast farblosen Flüssigkeit mit einem Amingehalt von 2.73 mmol N/g, was einem berechneten Equivalentgewicht von ca. 367 g/Eq entspricht, erhalten.

Das **NCO-Polymer** wurde hergestellt, indem 1300 g Polyoxypropylen-Diol (Acclaim® 4200 N, von Bayer MaterialScience; OH-Zahl 28.5 mg KOH/g), 2600 g Polyoxypropylenpolyoxyethylen-Triol (Caradol® MD34-02, von Shell; OH-Zahl 35.0 mg KOH/g), 600 g 4,4'-Methylendiphenyldiisocyanat (Desmodur® 44 MC L, von Bayer MaterialScience) und 500 g Diisodecylphthalat nach bekanntem Verfahren bei 80 °C zu einem NCO-terminierten Polyurethanpolymer mit einem Gehalt an freien Isocyanat-Gruppen von 2.05 Gewichts-% umgesetzt wurden.

### 3. Herstellung von Klebstoffen

Für jede Zusammensetzung wurden die in den Tabellen 1 bis 5 angegebenen Inhaltsstoffe in den angegebenen Mengen (in Gewichtsteilen) der ersten Komponente ("Komponente-1") mittels eines Zentrifugalmischers (SpeedMixer™ DAC 150, FlackTek Inc.) unter Feuchtigkeitsausschluss zu einer homogenen Paste verarbeitet und aufbewahrt. Ebenso wurden die in den Tabellen 1 bis 5 angegebenen Inhaltsstoffe der zweiten Komponente ("Komponente-2") verarbeitet und aufbewahrt. Anschliessend wurden die beiden Komponenten mittels des Zentrifugalmischers unter Feuchtigkeitsausschluss zu einer homogenen Paste verarbeitet und diese unverzüglich folgendermassen geprüft:
Als Mass für die Offenzeit wurde die Zeit bis zur Klebefreiheit **("tack-free time")** bestimmt. Dazu wurden einige Gramm der Zusammensetzung in einer Schichtdicke von ca. 2 mm auf Pappkarton aufgetragen und im Normklima die Zeitdauer bestimmt, bis beim leichten Antippen der Oberfläche der Zusammensetzung mittels einer Pipette aus LDPE erstmals keine Rückstände auf der Pipette mehr zurückblieben.

Die **Shore A-Härte** wurde bestimmt nach DIN 53505 an während der in den Tabellen 1 bis 5 angegebenen Zeit im Normklima ausgehärteten Prüfkörpern. Zur Bestimmung der mechanischen Eigenschaften wurde die Zusammensetzung auf eine PTFE-beschichteten Folie zu einem Film von 2 mm Dicke ausgegossen. Die Klebstoffe ***Ref-16*** bis ***Ref-18*** und ***Z-10*** wurden zwischen zwei PTFE-beschichteten Folien zu einem Film von 2 mm Dicke verpresst. Diese Filme wurden während 7 Tagen im Normklima gelagert, einige Hanteln mit einer Länge von 75 mm bei einer Steglänge von 30 mm und einer Stegbreite von 4 mm aus dem Film ausgestanzt und diese gemäss DIN EN 53504 bei einer Zuggeschwindigkeit von 200 mm/min auf **Zugfestigkeit** (Bruchkraft), **Bruchdehnung** und **E-Modul** (bei 0.5-5% Dehnung) geprüft. Dabei dient der Wert für die Zugfestigkeit als Mass für die Endfestigkeit des Klebstoffes.

Zur Messung der **Zugscherfestigkeit** wurden diverse Prüfkörper hergestellt, wobei der Klebstoff jeweils ca. 5 Minuten nach Abschluss der Mischzeit zwischen zwei mit Sika® Aktivator (von Sika Schweiz AG) gereinigten Glasplättchen in einer Schichtdicke von 2 mm und auf einer überlappenden Klebefläche 15 x 45 mm aufgebracht wurde. An diesen Prüfkörpern wurde die Zugscherfestigkeit nach DIN EN 1465 bestimmt, wobei die Prüfkörper vor der Messung während 3 Stunden im Normklima gelagert waren.

Der **Aspekt** und **Blasenbildung** wurden visuell an den hergestellten Filmen beurteilt.

Die Resultate sind in den Tabellen 1 bis 5 angegeben.
Bei den Klebstoffen **Z-1** bis ***Z-10*** handelt es sich um erfindungsgemässe Beispiele. Bei den Klebstoffen ***Ref-1*** bis ***Ref-18*** handelt es sich um Vergleichsbeispiele.

**Tabelle 1: Zusammensetzung (in Gewichtsteilen) und Eigenschaften von Z-1 und Z-2 und Ref-1 bis Ref-4. "s.wenig" steht für "sehr wenig"**

| **Klebstoff** | | ***Ref***-***1*** | ***Ref***-***2*** | ***Ref***-***3*** | ***Z-1*** | ***Z-2*** | ***Ref***-***4*** |
|---|---|---|---|---|---|---|---|
| **Komponente**-**1:** | | | | | | | |
| | Lupranol® 4003/1 | - | - | 55.00 | 55.00 | 44.40 | 44.40 |
| | Voranol® CP 4755 | 30.00 | 30.00 | - | - | 5.60 | 5.60 |
| | Aldimin-1 | - | 3.33 | - | 3.33 | 3.33 | - |
| | 1,4-Butandiol | 0.43 | - | 0.43 | - | - | 0.43 |
| | Kreide | 25.00 | 25.00 | - | - | 5.00 | 5.00 |
| | Salicylsäure¹ | - | 0.07 | - | 0.07 | 0.07 | - |
| | K-Kat® A-209 | 0.12 | 0.12 | 0.12 | 0.12 | 0.12 | 0.12 |

| **Komponente**-**2:** | | | | | | | |
|---|---|---|---|---|---|---|---|
| Desmodur® CD | | 4.33 | 4.33 | 4.33 | 4.33 | 4.33 | 4.33 |
| Polymer-Gehalt² | | 0% | 0% | 45% | 45% | 40% | 40% |
| Dichte³ [g/ml] | | 1.74 | 1.70 | 1.06 | 1.05 | 1.18 | 1.19 |
| tack-free time [min] | | 6 | 18 | 7 | 29 | 29 | 5 |
| Shore A nach 3h | | 45 | 17 | 65 | 27 | 26 | 64 |
| 1d | | 45 | 44 | 75 | 59 | 58 | 73 |
| 7d | | 48 | 45 | 76 | 62 | 62 | 73 |
| Zugfestigkeit [MPa] | | 1.61 | 1.31 | 6.77 | 8.35 | 7.16 | 5.58 |
| Bruchdehnung [%] | | 133 | 159 | 96 | 157 | 178 | 108 |
| E-Modul [MPa] | | 4.27 | 2.57 | 7.56 | 4.88 | 4.39 | 6.90 |
| Aspekt, Blasenbildung | | klebfrei, keine | klebfrei, wenig | klebfrei, keine | klebfrei, keine | klebfrei, s.wenig | klebfrei, s.wenig |

| | | | | | | | |
|---|---|---|---|---|---|---|---|
| ¹ 5% in Dioctyladipat ² festes Polymer aus Polymer-Polyol bezogen auf Summe aus Polymer-Polyol und weiteres Polyol [Gew.-%] ³ spezifisches Gewicht der vermischten Zusammensetzung | | | | | | | |

**Tabelle 2: Zusammensetzung (in Gewichtsteilen) und Eigenschaften von Z-3 bis Z-5 und Ref-5 bis Ref-7. "s.wenig" steht für "sehr wenig"**

| **Klebstoff** | | ***Z-3*** | ***Ref-5*** | ***Z-4*** | ***Ref-6*** | ***Z-5*** | ***Ref-7*** |
|---|---|---|---|---|---|---|---|
| **Komponente**-**1:** | | | | | | | |
| | Lupranol® 4003/1 | 33.30 | 33.30 | 22.20 | 22.20 | 11.10 | 11.10 |
| | Voranol® CP 4755 | 11.70 | 11.70 | 17.80 | 17.80 | 23.90 | 23.90 |
| | Aldimin-1 | 3.33 | - | 3.33 | - | 3.33 | - |
| | 1,4-Butandiol | - | 0.43 | - | 0.43 | - | 0.43 |
| | Kreide | 10.00 | 10.00 | 15.00 | 15.00 | 20.00 | 20.00 |
| | Salicylsäure ¹ | 0.07 | - | 0.07 | - | 0.07 | - |
| | K-Kat® A-209 | 0.12 | 0.12 | 0.12 | 0.12 | 0.12 | 0.12 |

| **Komponente**-**2:** | | | | | | | |
|---|---|---|---|---|---|---|---|
| Desmodur® CD | | 4.33 | 4.33 | 4.33 | 4.33 | 4.33 | 4.33 |
| Polymer-Gehalt² | | 33% | 33% | 25% | 25% | 14% | 14% |
| Dichte³ [g/ml] | | 1.31 | 1.33 | 1.44 | 1.47 | 1.57 | 1.60 |
| tack-free time [min] | | 30 | 5 | 24 | 7 | 21 | 5 |
| Shore A nach 3h | | 24 | 60 | 24 | 56 | 20 | 48 |
| 1d | | 56 | 67 | 50 | 63 | 50 | 54 |
| 7d | | 57 | 67 | 53 | 63 | 50 | 54 |
| Zugfestigkeit [MPa] | | 4.87 | 5.57 | 3.36 | 3.73 | 2.09 | 2.87 |
| Bruchdehnung [%] | | 183 | 149 | 201 | 163 | 197 | 204 |
| E-Modul [MPa] | | 3.92 | 5.71 | 3.11 | 5.25 | 2.95 | 4.55 |
| Aspekt, Blasenbildung | | klebfrei, s.wenig | klebfrei, keine | klebfrei, s.wenig | klebfrei, keine | klebfrei, s.wenig | klebfrei, keine |

| | | | | | | | |
|---|---|---|---|---|---|---|---|
| ¹ 5% in Dioctyladipat ² festes Polymer aus Polymer-Polyol bezogen auf Summe aus Polymer-Polyol und weiteres Polyol [Gew.-%] ³ spezifisches Gewicht der vermischten Zusammensetzung | | | | | | | |

**Tabelle 3: Zusammensetzung (in Gewichtsteilen) und Eigenschaften von Z-6 bis Z-8 und Ref-8 bis Ref-12. "n.b." steht für "nicht bestimmt" "s.wenig" steht für "sehr wenig"**

| **Klebstoff** | | ***Ref-8*** | ***Ref-9*** | ***Z-6*** | ***Z-7*** | ***Z-8*** | ***Ref-10*** | ***Ref-11*** | ***Ref-12*** |
|---|---|---|---|---|---|---|---|---|---|
| **Komponente**-**1:** | | | | | | | | | |
| | Lupranol® 4003/1 | - | - | 33.30 | 33.30 | 33.30 | 33.30 | 33.30 | 33.30 |
| | Voranol® CP 4755 | 30.00 | 30.00 | 11.70 | 11.70 | 11.70 | 11.70 | 11.70 | 11.70 |
| | Aldimin-1 | 3.33 | 3.33 | 3.33 | 3.33 | - | 3.33 | 3.33 | 3.33 |
| | Aldimin-2 | - | - | - | - | 3.33 | - | - | - |
| | Kreide | 15.00 | 15.00 | - | - | - | - | - | - |
| | Wasser | - | 0.10 | - | 0.10 | 0.10 | - | - | - |
| | K-Kat® XC-227 | - | - | - | - | - | 0.01 | - | - |
| | DABCO | - | - | - | - | - | - | 0.07 | - |
| | DBTDL | - | - | - | - | - | - | - | 0.26 |

| **Komponente**-**2:** | | | | | | | | | |
|---|---|---|---|---|---|---|---|---|---|
| Desmodur® CD | | 4.33 | 4.33 | 4.33 | 4.33 | 4.33 | 4.33 | 4.33 | 4.33 |
| Salicylsäure ¹ | | 0.07 | 0.07 | 0.07 | 0.07 | 0.07 | 0.07 | 0.07 | 0.07 |
| K-Kat® A-209 | | 0.12 | 0.12 | 0.12 | 0.12 | 0.12 | - | - | - |
| Polymer-Gehalt² | | 0% | 0% | 33% | 33% | 33% | 33% | 33% | 33% |
| Dichte³ [g/ml] | | 1.51 | 1.51 | 1.05 | 1.05 | 1.05 | 1.05 | 1.05 | 1.05 |
| tack-free time [min] | | 21 | 23 | 26 | 27 | 30 | 8 | 40 | 17 |
| Shore A nach 3h | | 10 | 11 | 19 | 32 | 15 | 21 | 14 | 29 |
| 1d | | 42 | 22 | 53 | 50 | 51 | 54 | 54 | 51 |
| 7d | | 42 | 36 | 56 | 50 | 51 | 55 | 54 | 54 |
| Zugfestigkeit [MPa] | | 1.50 | 1.39 | 5.93 | 5.71 | 6.11 | 6.08 | 3.57 | 4.43 |
| Bruchdehnung [%] | | 145 | 127 | 178 | 189 | 193 | 171 | 150 | 167 |
| E-Modul [MPa] | | 2.52 | 2.55 | 3.78 | 3.58 | 3.34 | 4.65 | 2.81 | 3.10 |
| Aspekt, Blasenbildung | | klebfrei, minim | klebfrei, s.wenig | klebfrei, keine | klebfrei, keine | klebfrei, keine | klebfrei, keine | klebfrei, einige | klebfrei, wenig |
| Zugscherfestigkeit nach 3h [MPa] | | n.b. | 0.33 | n.b. | 1.13 | n.b. | n.b. | n.b. | n.b. |

| | | | | | | | | | |
|---|---|---|---|---|---|---|---|---|---|
| ¹ 5% in Dioctyladipat ² festes Polymer aus Polymer-Polyol bezogen auf Summe aus Polymer-Polyol und weiteres Polyol [Gew.-%] ³ spezifisches Gewicht der vermischten Zusammensetzung | | | | | | | | | |

**Tabelle 4: Zusammensetzung (in Gewichtsteilen) und Eigenschaften von Z-9 und Ref-13 bis Ref-15. "s.wenig" steht für "sehr wenig"**

| **Klebstoff** | | ***Ref-13*** | ***Ref***-***14*** | ***Ref***-***15*** | ***Z-9*** |
|---|---|---|---|---|---|
| **Komponente**-**1:** | | | | | |
| | Desmophen® 5028 | - | - | 37.50 | 37.50 |
| | Voranol® CP 4755 | 30.00 | 30.00 | - | - |
| | Aldimin-1 | - | 3.30 | - | 3.30 |
| | 1,4-Butandiol | 0.67 | - | 0.67 | - |
| | Kreide | 7.50 | 7.50 | - | - |
| | Salicylsäure ¹ | - | 0.06 | - | 0.06 |
| | K-Kat® A-209 | 0.12 | 0.12 | 0.12 | 0.12 |

| **Komponente**-**2:** | | | | | |
|---|---|---|---|---|---|
| Desmodur® CD | | 5.10 | 4.30 | 5.10 | 4.30 |
| Polymer-Gehalt² | | 0% | 0% | 20% | 20% |
| Dichte³ [g/ml] | | 1.34 | 1.32 | 1.10 | 1.08 |
| tack-free time [min] | | 5 | 22 | 5 | 18 |
| Shore A nach 3h | | 31 | 9 | 44 | 16 |
| 1d | | 35 | 36 | 54 | 53 |
| 7d | | 40 | 42 | 54 | 55 |
| Zugfestigkeit [MPa] | | 2.01 | 1.25 | 5.73 | 4.46 |
| Bruchdehnung [%] | | 158 | 146 | 136 | 151 |
| E-Modul [MPa] | | 3.18 | 1.92 | 6.66 | 4.50 |
| Aspekt, Blasenbildung | | klebfrei, s.wenig | klebfrei, keine | klebfrei, s.wenig | klebfrei, keine |

| | | | | | |
|---|---|---|---|---|---|
| ¹ 5% in Dioctyladipat ² festes Polymer aus Polymer-Polyol bezogen auf Summe aus Polymer-Polyol und weiteres Polyol [Gew.-%] ³ spezifisches Gewicht der vermischten Zusammensetzung | | | | | |

**Tabelle 5: Zusammensetzung (in Gewichtsteilen) und Eigenschaften von Z-10 und Ref-16 bis Ref-18. "n.b." steht für "nicht bestimmt"**

| **Klebstoff** | | ***Ref-16*** | ***Ref***-***17*** | ***Ref-18*** | ***Z-10*** |
|---|---|---|---|---|---|
| **Komponente**-**1:** | | | | | |
| | Lupranol® 4003/1 | - | - | 44.78 | 43.93 |
| | Voranol® CP 4755 | 25.60 | 25.05 | - | - |
| | Aldimin-2 | - | 2.51 | - | 2.51 |
| | 1,4-Butandiol | 4.35 | 4.07 | 4.35 | 4.02 |
| | MXDA | 1.02 | 1.00 | 1.02 | 1.00 |
| | Kaolin | 19.20 | 18.82 | - | - |
| | Molekularsieb | 2.05 | 2.00 | 2.05 | 2.01 |
| | Wasser | - | 0.05 | - | 0.03 |

| **Komponente**-**2:** | | | | | |
|---|---|---|---|---|---|
| Desmodur® CD | | 18.48 | 17.91 | 18.49 | 17.91 |
| NCO-Polymer | | 26.69 | 25.88 | 26.71 | 25.89 |
| Kieselsäure | | 2.57 | 2.49 | 2.57 | 2.49 |
| Salicylsäure ¹ | | - | 0.20 | - | 0.20 |
| K-Kat® A-209 | | 0.04 | 0.03 | 0.03 | 0.03 |
| Polymer-Gehalt² | | 0% | 0% | 45% | 45% |
| Dichte³ [g/ml] | | 1.44 | 1.43 | 1.14 | 1.13 |
| tack-free time [min] | | 9 | 22 | 7 | 17 |
| Shore A nach 3h | | 25 | 36 | 49 | 46 |
| 1d | | n.b. | 72 | n.b. | 80 |
| 7d | | 82 | 83 | 80 | 82 |
| Zugfestigkeit [MPa] | | 11.7 | 10.5 | 14.4 | 13.7 |
| Bruchdehnung [%] | | 218 | 213 | 167 | 209 |
| E-Modul [MPa] | | 49.1 | 45.5 | 51.1 | 43.8 |
| Aspekt, Blasenbildung | | klebfrei, keine | klebfrei, keine | klebfrei, keine | klebfrei, keine |

| | | | | | |
|---|---|---|---|---|---|
| ¹ 5% in Dioctyladipat ² festes Polymer aus Polymer-Polyol bezogen auf Summe aus Polymer-Polyol und weiteres Polyol [Gew.-%] ³ spezifisches Gewicht der vermischten Zusammensetzung | | | | | |

## Patentansprüche

1. Zusammensetzung bestehend aus
einer ersten Komponente enthaltend
- mindestens ein Polymer-Polyol, welches eine Dispersion eines bei Raumtemperatur festen Polymers in einem bei Raumtemperatur flüssigen Polyetherpolyol ist,
- und gegebenenfalls weitere Polyole,
wobei der Anteil an festem Polymer aus dem Polymer-Polyol mindestens 15 Gewichts-% bezogen auf die Summe aus Polymer-Polyol und gegebenenfalls vorhandenen weiteren Polyolen beträgt;
und einer zweite Komponente enthaltend Diphenylmethandiisocyanat; wobei mindestens eine der beiden Komponenten zusätzlich mindestens eine Zirkonium(IV)-Verbindung als Katalysator enhält;
und wobei mindestens eine der beiden Komponenten zusätzlich mindestens ein Aldimin der Formel (I) enthält, 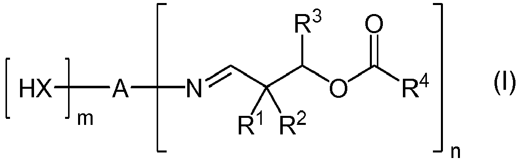 wobei
A für einen (m+n)-wertigen, gegebenenfalls Ethereinheiten enthaltenden, Kohlenwasserstoff-Rest mit 2 bis 20 C-Atomen steht,
X für O oder N-R⁵ steht,
R¹ und R² unabhängig voneinander jeweils für einen einwertigen Kohlenwasserstoff-Rest mit 1 bis 12 C-Atomen stehen, oder zusammen für einen zweiwertigen Kohlenwasserstoff-Rest mit 4 bis 12 C-Atomen stehen, welcher Teil eines, gegebenenfalls substituierten, carbocyclischen Rings mit 5 bis 8, bevorzugt 6, C-Atomen ist;
R³ für ein Wasserstoffatom oder für einen Alkyl- oder Arylalkyl- oder Alkoxycarbonyl-Rest mit 1 bis 12 C-Atomen steht;
R⁴ für einen einwertigen, gegebenenfalls Ether- oder Aldehydeinheiten enthaltenden Kohlenwasserstoff-Rest mit 6 bis 20 C-Atomen steht;
R⁵ für einen einwertigen Kohlenwasserstoff-Rest mit 1 bis 30 C-Atomen steht, welcher gegebenenfalls mindestens eine Carbonsäureester-, Nitril-, Nitro-, Phosphonsäureester-, Sulfon- oder Sulfonsäureester-Gruppe oder eine Gruppe der Formel 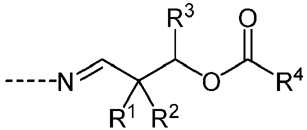 aufweist; und
m für 0 oder 1 und n für 1 oder 2 oder 3 steht, mit der Massgabe, dass m+n für 2 oder 3 steht.

2. Zusammensetzung gemäss Anspruch 1, **dadurch gekennzeichnet, dass** das Aldimin der Formel (I) ausgewählt ist aus der Gruppe bestehend aus N,N'-Bis(2,2-dimethyl-3-lauroyloxypropyliden)-hexamethylen-1,6-diamin, N,N'-Bis(2,2-dimethyl-3-lauroyloxypropyliden)-3-aminomethyl-3,5,5-trimethylcyclohexylamin, N-2,2-Dimethyl-3-lauroyloxypropyliden-2-(2-amino-ethoxy)ethanol, N,N'-Bis(2,2-dimethyl-3-lauroyloxypropylidene)polyoxypropylendiamin mit einem mittleren Molekulargewicht im Bereich von 710 bis 810 g/mol und N,N',N"-Tris(2,2-dimethyl-3-lauroyloxypropyliden)poly-oxypropylenetriamin mit einem mittleren Molekulargewicht im Bereich von 1'190 bis 1'290 g/mol.

3. Zusammensetzung gemäss einem der vorhergehenden Ansprüche, **dadurch gekennzeichnet, dass** das feste Polymer ein Copolymer von Acrylnitril und Styrol (SAN) oder ein Polyharnstoff bzw. Polyhydrazodicarbonamid (PHD) oder ein Polyurethan ist.

4. Zusammensetzung gemäss einem der vorhergehenden Ansprüche, **dadurch gekennzeichnet, dass** das Polyetherpolyol ein Ethylenoxid-terminiertes Polyoxypropylentriol mit einem Molekulargewicht im Bereich von 1000 bis 6000 g/mol ist.

5. Zusammensetzung gemäss einem der vorhergehenden Ansprüche, **dadurch gekennzeichnet, dass** die Zusammensetzung mindestens ein weiteres Polyol, welches ein Polyetherpolyol, ein Polyesterpolyol, ein Polycarbonatpolyol oder ein Polybutadienpolyol ist, enthält.

6. Zusammensetzung gemäss einem der vorhergehenden Ansprüche, **dadurch gekennzeichnet, dass** der Anteil an festem Polymer aus dem Polymer-Polyol bezogen auf die Summe aus Polymer-Polyol und gegebenenfalls vorhandenen weiteren Polyolen im Bereich von 20 bis 50 Gewichts-% liegt.

7. Zusammensetzung gemäss einem der vorhergehenden Ansprüche, **dadurch gekennzeichnet, dass** die zweite Komponente einen Gehalt an Diphenylmethandiisocyanat im Bereich von 20 bis 100 Gewichts-% aufweist.

8. Zusammensetzung gemäss einem der vorhergehenden Ansprüche, **dadurch gekennzeichnet, dass** die zweite Komponente der Zusammensetzung einen Isocyanat-Gehalt im Bereich von 10 bis 33.6 Gewichts-% aufweist.

9. Zusammensetzung gemäss einem der vorhergehenden Ansprüche, **dadurch gekennzeichnet, dass** Diphenylmethandiisocyanat in Form von partiell carbodiimidisiertem 4,4'-MDI und/oder in Form von anteilig mit Polyolen beziehungsweise polyfunktionellen Alkoholen adduktiertem 4,4'-MDI vorliegt.

10. Zusammensetzung gemäss einem der vorhergehenden Ansprüche, **dadurch gekennzeichnet, dass** die Zirkonium(IV)-Verbindung eine Zirkonium(IV)-Komplexverbindung ist.

11. Zusammensetzung gemäss einem der vorhergehenden Ansprüche, **dadurch gekennzeichnet, dass** sie im Wesentlichen frei von leichtflüchtigen Lösemitteln ist.

12. Zusammensetzung gemäss einem der vorhergehenden Ansprüche, **dadurch gekennzeichnet, dass** sie vor der Aushärtung einen Gehalt an freien Isocyanatgruppen von höchstens 8 Gewichts-% aufweist.

13. Verwendung einer Zusammensetzung gemäss einem der Ansprüche 1 bis 12 als elastischer Klebstoff.

14. Verfahren zum Verkleben, welches die Schritte umfasst:
- Applizieren einer Zusammensetzung gemäss einem der Ansprüche 1 bis 12, deren Komponenten vermischt sind, auf ein erstes Substrat,
- Kontaktieren der applizierten Zusammensetzung mit einem zweiten Substrat innerhalb der Offenzeit der Zusammensetzung,
oder
- Applizieren einer Zusammensetzung gemäss einem der Ansprüche 1 bis 12, deren Komponenten vermischt sind, auf ein erstes und auf ein zweites Substrat - Kontaktieren der applizierten Zusammensetzung auf den beiden Substraten miteinander innerhalb der Offenzeit der Zusammensetzung,
gefolgt von einer gewissen Zeitspanne des Aushärtens der Zusammensetzung, während derer die Verklebung gegebenenfalls so fixiert ist, dass sich die beiden Substrate nicht gegeneinander verschieben können.

15. Ausgehärtete Zusammensetzung, erhalten aus einer Zusammensetzung gemäss einem der Ansprüche 1 bis 12 nach dem Vermischen der beiden Komponenten und deren Aushärtung.

## Claims

1. Composition consisting of
a first component comprising
- at least one polymer polyol which is a dispersion of a polymer which is solid at room temperature in a polyether polyol which is liquid at room temperature,
- and optionally further polyols,
where the fraction of solid polymer from the polymer polyol is at least 15 weight%, based on the sum of polymer polyol and any further polyols present;
and a second component comprising diphenyl methane diisocyanate;
where at least one of the two components additionally comprises at least one zirconium(IV) compound as catalyst;
and where at least one of the two components additionally comprises at least one aldimine of the formula (I), 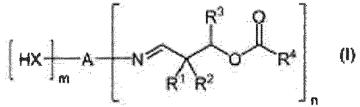 where
A is an (m+n)-valent hydrocarbyl radical having 2 to 20 carbon atoms that optionally contains ether units,
X is O or N-R⁵,
R¹ and R² independently of one another are each a monovalent hydrocarbyl radical having 1 to 12 carbon atoms, or together are a divalent hydrocarbyl radical having 4 to 12 carbon atoms which is part of an optionally substituted carbocyclic ring having 5 to 8, preferably 6, carbon atoms;
R³ is a hydrogen atom or is an alkyl or arylalkyl or alkoxycarbonyl radical having 1 to 12 carbon atoms;
R⁴ is a monovalent hydrocarbyl radical having 6 to 20 carbon atoms that optionally contains ether or aldehyde units;
R⁵ is a monovalent hydrocarbyl radical having 1 to 30 carbon atoms which optionally has at least one carboxylic ester, nitrile, nitro, phosphonic ester, sulfone or sulfonic ester group or a group of the formula 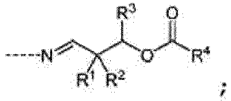 and
m is 0 or 1 and n is 1 or 2 or 3, with the proviso that m+n is 2 or 3.

2. Composition according to Claim 1, **characterized in that** the aldimine of the formula (I) is selected from the group consisting of N,N'-bis(2,2-dimethyl-3-lauroyloxypropylidene)hexamethylene-1,6-diamine, N,N'-bis(2,2-dimethyl-3-lauroyloxypropylidene)-3-aminomethyl-3,5,5-trimethylcyclohexylamine, N-2,2-dimethyl-3-lauroyloxypropylidene-2-(2-aminoethoxy)ethanol, N,N'-bis(2,2-dimethyl-3-lauroyloxypropylidene)polyoxypropylenediamine having an average molecular weight in the range from 710 to 810 g/mol and N,N',N"-tris(2,2-dimethyl-3-lauroyloxypropylidene)-polyoxypropylenetriamine having an average molecular weight in the range from 1190 to 1290 g/mol.

3. Composition according to either of the preceding claims, **characterized in that** the solid polymer is a copolymer of acrylonitrile and styrene (SAN) or a polyurea and/or polyhydrazodicarbonamide (PHD) or a polyurethane.

4. Composition according to any of the preceding claims, **characterized in that** the polyether polyol is an ethylene oxide-terminated polyoxypropylene triol having a molecular weight in the range from 1000 to 6000 g/mol.

5. Composition according to any of the preceding claims, **characterized in that** the composition comprises at least one further polyol which is a polyether polyol, a polyester polyol, a polycarbonate polyol or a polybutadiene polyol.

6. Composition according to any of the preceding claims, **characterized in that** the fraction of solid polymer from the polymer polyol, based on the sum of polymer polyol and any further polyols present, is in the range from 20 to 50 weight%.

7. Composition according to any of the preceding claims, **characterized in that** the second component has a diphenylmethane diisocyanate content in the range from 20 to 100 weight%.

8. Composition according to any of the preceding claims, **characterized in that** the second component of the composition has an isocyanate content in the range from 10 to 33.6 weight%.

9. Composition according to any of the preceding claims, **characterized in that** diphenylmethane diisocyanate is present in the form of partially carbodiimidized 4,4'-MDI and/or in the form of 4,4'-MDI proportionally adducted with polyols or polyfunctional alcohols.

10. Composition according to any of the preceding claims, **characterized in that** the zirconium(IV) compound is a zirconium(IV) complex compound.

11. Composition according to any of the preceding claims, **characterized in that** it is substantially free of volatile solvents.

12. Composition according to any of the preceding claims, **characterized in that** before the curing it has a free isocyanate group content of not more than 8 weight%.

13. Use of a composition according to any of Claims 1 to 12 as an elastic adhesive.

14. Method for adhesive bonding which comprises the steps of:
- applying a composition according to any of Claims 1 to 12, whose components are mixed, to a first substrate,
- contacting the applied composition with a second substrate within the open time of the composition,
or
- applying a composition according to any of Claims 1 to 12, whose components are mixed, to a first and to a second substrate,
- contacting the applied composition on the two substrates with one another within the open time of the composition,
followed by a certain timespan of the curing of the composition, during which the adhesive bond optionally is fixed in such a way that the two substrates are unable to shift relative to one another.

15. Cured composition obtained from a composition according to any of Claims 1 to 12 after the mixing of the two components and the curing thereof.

## Revendications

1. Composition, constituée par :
un premier composant contenant :
- au moins un polymère-polyol, qui est une dispersion d'un polymère solide à température ambiante dans un polyéther-polyol liquide à température ambiante,
- et éventuellement d'autres polyols,
la proportion de polymère solide du polymère-polyol étant d' au moins 15 % en poids, par rapport à la somme du polymère-polyol et des autres polyols éventuellement présents ;
et un second composant contenant du diisocyanate de diphénylméthane ;
au moins un des deux composants contenant en outre au moins un composé de zirconium (IV) en tant que catalyseur ;
et au moins un des deux composants contenant en outre au moins une aldimine de formule (I) 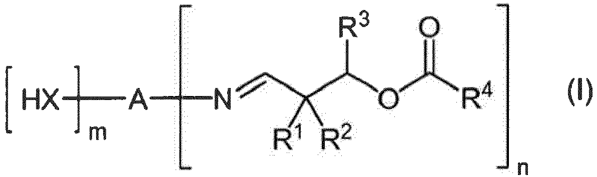
dans laquelle
A représente un radical hydrocarboné (m+n)-valent, contenant éventuellement des unités éther, de 2 à 20 atomes C,
X représente O ou N-R⁵,
R¹ et R² représentent chacun indépendamment l' un de l'autre un radical hydrocarboné monovalent de 1 à 12 atomes C, ou représentent ensemble un radical hydrocarboné bivalent de 4 à 12 atomes C, qui fait partie d'un cycle carbocyclique éventuellement substitué de 5 à 8, de préférence 6, atomes C ;
R³ représente un atome d'hydrogène ou un radical alkyle ou arylalkyle ou alcoxycarbonyle de 1 à 12 atomes C ;
R⁴ représente un radical hydrocarboné monovalent contenant éventuellement des unités éther ou aldéhyde, de 6 à 20 atomes C ;
R⁵ représente un radical hydrocarboné monovalent de 1 à 30 atomes C, qui comprend éventuellement au moins un groupe ester d'acide carboxylique, nitrile, nitro, ester d'acide phosphonique, acide sulfonique ou ester d'acide sulfonique ou un groupe de formule 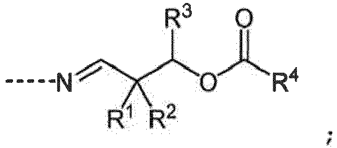 et
m représente 0 ou 1 et n représente 1 ou 2 ou 3, à condition que m+n représente 2 ou 3.

2. Composition selon la revendication 1, **caractérisée en ce que** l'aldimine de formule (I) est choisie dans le groupe constitué par la N,N'-bis(2,2-diméthyl-3-lauroyloxypropylidène)-hexaméthylène-1,6-diamine, la N,N'-bis(2,2-diméthyl-3-lauroyloxypropylidène)-3-aminométhyl-3,5,5-triméthylcyclohexylamine, le N-2,2-diméthyl-3-lauroyloxypropylidène-2-(2-amino-éthoxy)éthanol, la N,N'-bis(2,2-diméthyl-3-lauroyloxypropylidène)polyoxy-propylène-diamine ayant un poids moléculaire moyen dans la plage allant de 710 à 810 g/mol et la N,N',N"-tris(2,2-diméthyl-3-lauroyloxypropylidène)polyoxypropylènetriamine ayant un poids moléculaire moyen dans la plage allant de 1 190 à 1 290 g/mol.

3. Composition selon l'une quelconque des revendications précédentes, **caractérisée en ce que** le polymère solide est un copolymère d'acrylonitrile et de styrène (SAN) ou une polyurée ou un polyhydrazodicarbonamide (PHD) ou un polyuréthane.

4. Composition selon l'une quelconque des revendications précédentes, **caractérisée en ce que** le polyéther-polyol est un polyoxypropylène-triol à terminaison oxyde d'éthylène ayant un poids moléculaire dans là plage allant de 1 000 à 6 000 g/mol.

5. Composition selon l'une quelconque des revendications précédentes, **caractérisée en ce que** la composition contient au moins un polyol supplémentaire, qui est un polyéther-polyol, un polyester-polyol, un polycarbonate-polyol ou un polybutadiène-polyol.

6. Composition selon l'une quelconque des revendications précédentes, **caractérisée en ce que** la proportion de polymère solide du polymère-polyol par rapport à la somme du polymère-polyol et des autres polyols éventuellement présents se situe dans la plage allant de 20 à 50 % en poids.

7. Composition selon l'une quelconque des revendications précédentes, **caractérisée en ce que** le second composant présente une teneur en diisocyanate de diphénylméthane dans la plage allant de 20 à 100 % en poids.

8. Composition selon l'une quelconque des revendications précédentes, **caractérisée en ce que** le deuxième composant de la composition présente une teneur en isocyanate dans la plage allant de 10 à 33,6 % en poids.

9. Composition selon l'une quelconque des revendications précédentes, **caractérisée en ce que** le diisocyanate de diphénylméthane se présente sous la forme de 4,4'-MDI partiellement carbodiimidé et/ou sous la forme de 4,4'-MDI partiellement additionné avec des polyols ou des alcools polyfonctionnels.

10. Composition selon l'une quelconque des revendications précédentes, **caractérisée en ce que** le composé de zirconium (IV) est un composé complexe de zirconium (IV).

11. Composition selon l'une quelconque des revendications précédentes, **caractérisée en ce qu'**elle est essentiellement exempte de solvants volatils.

12. Composition selon l'une quelconque des revendications précédentes, **caractérisée en ce qu'**elle présente avant le durcissement une teneur en groupes isocyanate libres d'au plus 8 % en poids.

13. Utilisation d'une composition selon l'une quelconque des revendications 1 à 12 en tant qu'adhésif élastique.

14. Procédé de collage, qui comprend les étapes suivantes :
- l'application d'une composition selon l'une quelconque des revendications 1 à 12, dont les composants sont mélangés, sur un premier substrat,
- la mise en contact de la composition appliquée avec un second substrat pendant le temps d'ouverture de la composition,
ou
- l'application d'une composition selon l'une quelconque des revendications 1 à 12, dont les composants sont mélangés, sur un premier et un second substrat,
- la mise en contact de la composition appliquée sur les deux substrats pendant le temps d'ouverture de la composition,
suivies par une certaine durée de durcissement de la composition, pendant laquelle le collage est éventuellement fixé de sorte que les deux substrats ne puissent pas glisser l'un sur l'autre.

15. Composition durcie, obtenue à partir d'une composition selon l'une quelconque des revendications 1 à 12 après le mélange des deux composants et son durcissement.
